(19) Europäisches Patentamt
European Patent Office
Office européen des brevets

(11) EP 2 957 866 B1

(12) **FASCICULE DE BREVET EUROPEEN**

(45) Date de publication et mention
de la délivrance du brevet:
**28.12.2016 Bulletin 2016/52**

(51) Int Cl.:
**G01C 21/16** *(2006.01)*  **G01C 21/20** *(2006.01)*
**G01B 21/16** *(2006.01)*

(21) Numéro de dépôt: **15172435.8**

(22) Date de dépôt: **16.06.2015**

(54) **PROCEDE DE LOCALISATION D'UN APPAREIL QUI EST DEPLACE A L'INTERIEUR D'UN ESPACE TRIDIMENTIONNEL**

LOKALISIERUNGSVERFAHREN EINES GERÄTS, DAS IN EINEM DREIDIMENSIONALEN RAUM BEWEGT WIRD

METHOD FOR LOCATING A DEVICE WHICH IS MOVED WITHIN A THREE-DIMENSIONAL SPACE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.06.2014 FR 1455577**

(43) Date de publication de la demande:
**23.12.2015 Bulletin 2015/52**

(73) Titulaires:
• **Commissariat à l'Énergie Atomique et aux Énergies Alternatives**
**75015 Paris (FR)**
• **Movea**
**38000 Grenoble (FR)**

(72) Inventeur: **VILLIEN, Christophe**
**38170 Seyssinet-Pariset (FR)**

(74) Mandataire: **Colombo, Michel**
**GIE Innovation Competence Group**
**310 bis Avenue Berthelot**
**69008 Lyon (FR)**

(56) Documents cités:
**WO-A1-2012/158441**

• **Julian Straub: "Pedestrian Indoor Localization and Tracking using a Particle Filter combined with a learning Accessibility Map", , 1 août 2010 (2010-08-01), pages 1-76, XP055168883, Extrait de l'Internet: URL:http://www.jstraub.de/download/Straub1 0PedestrianLocalization.pdf [extrait le 2015-02-10]**
• **SANJEEV ARULAMPALAM M ET AL: "A Tutorial on Particle Filters for Online Nonlinear/Non-Gaussian Bayesian Tracking", IEEE TRANSACTIONS ON SIGNAL PROCESSING, IEEE SERVICE CENTER, NEW YORK, NY, US, vol. 50, no. 2, 1 février 2002 (2002-02-01), XP011059526, ISSN: 1053-587X**
• **BERNHARD SCHMITZ ET AL: "Combination of Map-Supported Particle Filters with Activity Recognition for Blind Navigation", 11 juillet 2012 (2012-07-11), COMPUTERS HELPING PEOPLE WITH SPECIAL NEEDS, SPRINGER BERLIN HEIDELBERG, BERLIN, HEIDELBERG, PAGE(S) 529 - 535, XP047010300, ISBN: 978-3-642-31533-6 * le document en entier ***
• **OLIVER WOODMAN ET AL: "Pedestrian localisation for indoor environments", PROCEEDINGS OF THE 10TH INTERNATIONAL CONFERENCE ON UBIQUITOUS COMPUTING, UBICOMP '08, 1 janvier 2008 (2008-01-01), page 114, XP055119346, New York, New York, USA DOI: 10.1145/1409635.1409651 ISBN: 978-1-60-558136-1**

**Description**

L'invention concerne un procédé de localisation d'un appareil qui est déplacé à l'intérieur d'un espace tridimensionnel. L'invention a également pour objet un support d'enregistrement d'informations, une unité électronique et un appareil pour la mise en oeuvre de ce procédé.

De tels procédés sont particulièrement utiles lorsqu'un procédé de localisation par GPS (« Global Positioning System ») de l'appareil n'est pas possible. C'est par exemple souvent le cas à l'intérieur des bâtiments.

Des procédés connus de localisation utilisent les mesures d'une centrale inertielle logée à l'intérieur de l'appareil lui-même pour mesurer sa direction de déplacement et l'amplitude de son déplacement dans cette direction depuis une position précédente. Parmi ces procédés connus, certains utilisent des filtres à particules pour estimer la position de l'appareil dans l'environnement tridimensionnel. Pour cela, les filtres à particules exploitent le fait qu'il existe des contraintes prédéfinies sur les déplacements de l'appareil à l'intérieur de l'environnement tridimensionnel. Par exemple, une contrainte typique est qu'un déplacement ne peut pas traverser un mur.

Ainsi, ces procédés connus de localisation comportent typiquement :

a) la fourniture d'une carte de l'espace tridimensionnel et de contraintes prédéfinies sur les déplacements de l'appareil dans cet espace tridimensionnel,

b) la génération, par un calculateur électronique, de plusieurs particules distinctes, chaque particule étant associée :

- à des coordonnées codant sa position sur la carte, et
- à un poids représentant la probabilité que l'appareil se trouve à l'emplacement de cette particule,

c) la réception de mesures représentatives de la direction de déplacement de l'appareil et de l'amplitude de ce déplacement depuis sa précédente position, ces mesures étant réalisées par des capteurs embarqués dans l'appareil déplacé,

d) la mise à jour des coordonnées de la position de chaque particule en fonction des mesures reçues lors de l'étape c) et d'une loi de déplacement prédéterminée pour déplacer cette particule de sa précédente position $P^i_{k-1}$ vers une nouvelle position $P^i_k$ de manière corrélée avec le déplacement mesuré de l'appareil, chaque loi de déplacement comportant à cet effet au moins une première variable mesurée dont la valeur est fonction de la mesure de la direction de déplacement reçue lors de l'étape c) et une seconde variable mesurée dont la valeur est fonction de la mesure de l'amplitude de ce déplacement reçue lors de l'étape c), puis

e) pour chaque particule, si le dernier déplacement de cette particule de la position $P^i_{k-1}$ à la position $P^i_k$ satisfait aux contraintes prédéfinies, l'augmentation du poids associé à cette particule par rapport aux poids des particules dont le dernier déplacement enfreint ces contraintes prédéfinies,

- la réitération des étapes c) à e), et

f) l'estimation de la position de l'appareil à partir des positions des particules et des poids associés à ces particules en attribuant, lors de cette estimation, plus d'importance aux positions des particules associées aux poids les plus élevés.

De tels procédés connus de localisation d'un appareil mettant en oeuvre un filtre de particules sont par exemple divulgués dans :

- les demandes de brevet WO 2012158441 et US8548738B1,
- dans l'article O. Woodman et Al, « Pedestrian localisation for indoor environments », ACM, 2008.

Un tel procédé est également divulgué en détail dans la thèse de J. Straub, « Pedestrian indoor localisation and tracking using a particle filter combined with a learning accessibility map », thèse, août 2010, Université technique de Munich. Cette thèse est téléchargeable à l'adresse suivante :

http://people.csail.mit.edu/jstraub/download/Straub10PedestrianLocalization.pdf.

Par la suite, cette thèse est référencée sous le terme « Straub 2010 ».

De l'état de la technique est également connu de :

- Sanjeev Arulampalam M. Et Al, « A tutorial on particle filters for Online Non linear/Non Gaussian Bayesian Tracking », IEEE Transaction on signal processing, New York, vol. 50, N°2, 2002-02-01,

EP 2 957 866 B1

- Bernhard Schmitz et Al, « Combination of Map-supported Particle Filters with Activity Recognition for Blind Navigation », 2012-07-11, Compouters Helping People with spécial Needs, Springer Berlin Heidelberg, Berlin, Heidelberg, pages 529-535,
- Oliver Woodman Et Al, « Pedestrian localisation for indoor environments », Proceedings of the 10th international conférence on ubiquitous computing, UBICOMP 08, 2008-01-01, page 114, New York.

L'invention vise à proposer un procédé de localisation de l'appareil plus précis.

Elle a donc pour objet un tel procédé conforme à la revendication 1.

Le procédé ci-dessus permet d'utiliser différentes lois de déplacement dans différentes zones de la carte. Ceci permet d'augmenter la précision d'estimation de la position de l'appareil.

Les modes de réalisation de ce procédé de localisation peuvent comporter une ou plusieurs des caractéristiques supplémentaires des revendications dépendantes.

Ces modes de réalisation du procédé de localisation présentent en outre les avantages suivants :

- l'utilisation d'un facteur correctif permet d'obtenir une localisation de l'appareil plus précise même en présence d'un biais, par exemple, sur la direction de déplacement ou sur l'amplitude du déplacement de cet appareil ;
- appliquer le facteur correctif à la variable mesurée correspondant à l'amplitude du déplacement de l'appareil permet de corriger automatiquement un biais sur l'amplitude du déplacement de cet appareil ;
- appliquer le facteur correctif à une variable mesurée correspondant à la direction du déplacement de l'appareil permet de corriger automatiquement un biais sur la direction de déplacement ;
- lors de l'étape de génération de nouvelles particules, associer ces nouvelles particules à des valeurs initiales pour le facteur correctif proches des valeurs actuelles du facteur correctif associées aux particules qui n'ont pas été supprimées permet d'accroître la précision de l'estimation de la valeur du facteur correctif et donc de la position de l'appareil au fur et à mesure des itérations des étapes c) à e);
- utiliser en tant que contraintes prédéfinies l'existence d'obstacles infranchissables par l'appareil dans l'environnement tridimensionnel permet d'accélérer la convergence du procédé de localisation vers une estimation précise de la position de l'appareil ;
- diviser la carte en plusieurs zones et associer à chacune de ces zones une liste d'identifiants des obstacles infranchissables contenus à l'intérieur de cette zone permet de conserver un pavage simple de la carte en plusieurs zones tout en étant capable d'utiliser des obstacles infranchissables entièrement situés à l'intérieur de ces zones ;
- utiliser une direction privilégiée de déplacement dans une zone de la carte pour augmenter ou au contraire diminuer le poids associé à une particule permet de converger plus rapidement vers une estimation précise de la position de l'appareil.

L'invention a également pour objet un support d'enregistrement d'informations comportant des instructions pour l'exécution du procédé ci-dessus de localisation, lorsque ces instructions sont exécutées par un calculateur électronique.

L'invention a également pour objet une unité électronique de localisation d'un appareil déplaçable à l'intérieur d'un espace tridimensionnel.

Enfin, l'invention a également pour objet un appareil directement transportable par un piéton qui se déplace à l'intérieur d'un espace tridimensionnel, cet appareil comportant :

- une centrale inertielle apte à mesurer des grandeurs physiques représentatives de la direction de déplacement de cet appareil et de l'amplitude de ce déplacement, et
- l'unité électronique de localisation ci-dessus.

L'invention sera mieux comprise à la lecture de la description qui va suivre, donnée uniquement à titre d'exemple non limitatif, et faite en se référant aux dessins sur lesquels :

- la figure 1 est une illustration schématique en coupe verticale d'un bâtiment à l'intérieur duquel est mis en oeuvre un procédé de localisation d'un appareil ;
- la figure 2 est une illustration schématique d'un appareil de localisation ;
- la figure 3 est une illustration schématique d'une carte utilisée pour localiser l'appareil de la figure 2 dans le bâtiment de la figure 1 ;
- la figure 4 est un organigramme d'un procédé de localisation mis en oeuvre par l'appareil de la figure 2.

Dans ces figures, les mêmes références sont utilisées pour désigner les mêmes éléments. Dans la suite de cette description, les caractéristiques et fonctions bien connues de l'homme du métier ne sont pas décrites en détail.

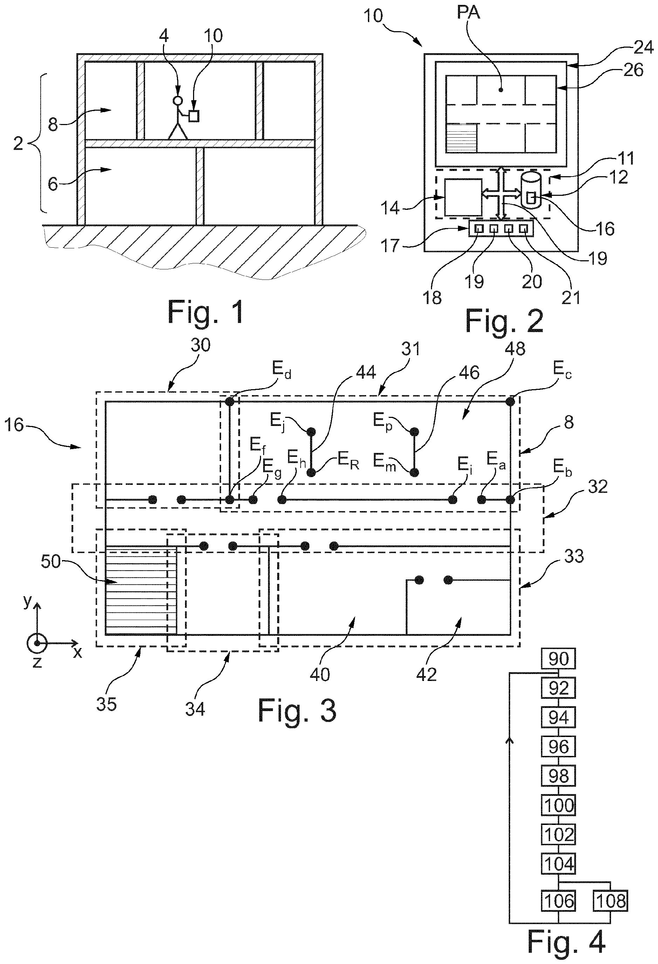

La figure 1 représente un ensemble comportant un bâtiment 2, à l'intérieur duquel un piéton 4 peut se déplacer librement en marchant. Le bâtiment 2 se divise en plusieurs étages. Ici, seul un rez-de-chaussée 6 et un premier étage 8 sont représentés. Les étages sont reliés entre-eux par des zones de changement d'étage telles qu'un escalier ou un ascenseur. Chaque étage comporte des pièces et des couloirs délimités par des murs infranchissables par le piéton 4. Le piéton 4 peut rentrer à l'intérieur d'une pièce uniquement en franchissant une porte. Ici, l'intérieur d'une pièce peut également comporter des obstacles infranchissables par le piéton 4 comme, par exemple, des piliers ou autres éléments de construction du bâtiment 2.

Pour aider le piéton 4 à se localiser à l'intérieur du bâtiment 2, celui-ci transporte directement à la main un appareil 10 de localisation. L'appareil 10 est capable de se localiser sur une carte du bâtiment 2 sans recours à d'autres capteurs que ceux qu'il comporte en interne. En particulier, l'appareil 10 peut repérer sa position à l'intérieur du bâtiment 2 sans utiliser un système de navigation faisant appel à des balises externes de repérage implantées dans l'environnement du bâtiment 2. Ces balises externes peuvent être des satellites ou des émetteurs d'ondes radio fixés au bâtiment 2. En particulier, l'appareil 10 peut repérer sa position sans utiliser un système GPS (« Global Positionning System »).

La figure 2 représente plus en détail l'appareil 10. L'appareil 10 comporte une unité électronique 11 de localisation. Cette unité 11 comporte une mémoire 12 ainsi qu'un calculateur électronique 14 programmable capable d'exécuter des instructions enregistrées dans la mémoire 12. A cet effet, la mémoire 12 comporte les instructions nécessaires pour exécuter le procédé de la figure 4. De plus, la mémoire 12 comprend un carte 16 du bâtiment 2. Cette carte est décrite plus en détail en référence à la figure 3.

L'appareil 12 comporte également une centrale inertielle 17. La centrale inertielle 17 transmet au calculateur 14, par l'intermédiaire d'un bus 19 de transmission d'informations, des mesures de la direction dans laquelle l'appareil 10 se déplace et de l'amplitude du déplacement dans cette direction depuis la dernière position relevée pour cet appareil 10. A cet effet, par exemple, la centrale inertielle 17 comporte un accéléromètre triaxe 18, un gyromètre 19 et un magnétomètre triaxe 20. Ici, la centrale inertielle 17 comporte aussi un baromètre 21 pour mesurer l'altitude de l'appareil 10.

L'appareil 10 est équipé d'un écran 24 permettant d'afficher une représentation graphique 26 de la carte 16 et, sur cette représentation graphique, un point PA représentant la position courante de l'appareil 4 à l'intérieur du bâtiment 2. Ce point PA est donc situé dans la représentation graphique 26 à l'emplacement de la carte 16 correspondant à la position actuelle de l'appareil 10 et donc du piéton 4.

Par exemple, l'appareil 10 est un smartphone ou une tablette électronique programmée pour exécuter le procédé de la figure 4.

La figure 3 représente graphiquement le contenu de la carte 16 pour l'étage 8 du bâtiment 2. Ce qui va maintenant être décrit pour l'étage 8 du bâtiment 2 s'applique à chaque étage de ce bâtiment et au rez-de-chaussée 6.

La carte 16 comporte plusieurs zones 30 à 35 dont la juxtaposition recouvre la totalité de la surface de l'étage 8. Ces zones sont parallèles au plancher de l'étage et contenues dans un même plan appelé « plan de l'étage ». Ce plan de l'étage est typiquement horizontal.

Les zones 30 à 35 sont contiguës et ne se chevauchent pas. Toutefois, pour accroître la lisibilité de la figure 3, les zones 30 à 35 sont représentées comme se chevauchant mais, dans la réalité, ce n'est pas le cas. Ainsi, ici, chaque portion de la périphérie de chaque zone est commune avec au plus une portion de la périphérie d'une autre zone différente.

Classiquement, les bords de chaque zone sont situés à l'emplacement d'un obstacle infranchissable par le piéton 4 tel qu'un mur. Toutefois, ici, une même zone peut englober plusieurs pièces du bâtiment 2. C'est par exemple le cas pour la zone 33 qui entoure une pièce 40 et une autre pièce 42 plus petite. Sur la figure 3, la périphérie de chaque pièce est délimitée par des murs représentés en traits fins. De plus, chaque pièce comporte au moins une ouverture pour accéder à l'intérieur de cette pièce. Sur la figure 3, les ouvertures sont situées entre les extrémités des murs marquées par des points. Une ouverture est typiquement une porte.

Une zone peut aussi englober des obstacles infranchissables par le piéton 4 situés à l'intérieur d'une pièce. Par exemple, un obstacle infranchissable est une cloison intérieure ou un pilier ou tout autre élément du bâtiment 2 qui ne peut pas être traversé par le piéton 4. Une telle zone est illustrée par la zone 31 qui comporte deux cloisons 44 et 46 situées à l'intérieur d'une pièce 48.

Ici, chaque zone est un polygone. Dès lors, pour chaque zone, la carte 16 contient :

- un identifiant de cette zone, et
- les coordonnées, dans un repère XYZ, des sommets du polygone délimitant cette zone.

Le repère XYZ est un repère orthogonal dans lequel les directions X et Y sont horizontales et la direction Z est verticale. Dans ce mode de réalisation, chaque zone est rectangulaire. Ainsi, seules les coordonnées des deux sommets diagonalement opposés d'une zone sont enregistrées dans la carte 16 pour économiser de la mémoire.

Pour chaque zone, la carte 16 comporte également :

- une liste d'identifiants des seuls obstacles infranchissables situés à l'intérieur de cette zone ou sur la périphérie de cette zone,
- un identifiant d'une loi de déplacement à l'intérieur de cette zone, et
- éventuellement, une direction privilégiée de déplacement.

La position et les dimensions de chaque objet infranchissable sont ici codées par un segment horizontal contenu dans le plan du plancher. Ainsi, chaque identifiant d'obstacle est associé à une paire de points $E_{jd}$ et $E_{jf}$. Les points $E_{jd}$ et $E_{jf}$ marquent respectivement, le début et la fin du segment $[E_{jd} ; E_{jf}]$, où j est l'identifiant de l'obstacle infranchissable. Les coordonnées des points $E_{jd}$ et $E_{jf}$, dans le plan du plancher, sont connues et contenues dans la carte 16. Dès lors, par exemple, la zone 31 comporte huit identifiants d'obstacles $IdO_1$ à $IdO_8$. Les identifiants $IdO_1$ à $IdO_8$ correspondent, respectivement, aux segments $[E_a ; E_b]$ ; $[E_b ; E_c]$ ; $[E_c ; E_d]$ ; $[E_d ; E_f]$ ; $[E_f ; E_g]$ ; $[E_h ; E_i]$ ; $[E_j ; E_R]$ et $[E_p ; E_m]$. La position des points $E_a$ à $E_m$ est représentée sur la figure 3.

Chaque loi de déplacement permet de calculer, à partir des mesures de la centrale inertielle 17, à un instant $t_k$, le déplacement d'une particule $S^i$ depuis une position précédente $P^i_{k-1}$ jusqu'à une nouvelle position $P^i_k$. Ce déplacement est directement corrélé à celui ce l'appareil 10. Typiquement, ce déplacement entre les positions $P^i_{k-1}$ et $P^i_k$ est identique ou très proche de celui de l'appareil 10 entre les instants $t_{k-1}$ et $t_k$. Par la suite, l'exposant « i » est l'identifiant de la particule et l'indice « k » est le numéro d'ordre de l'instant où sont mesurées la direction et l'amplitude du déplacement de l'appareil 10.

La centrale inertielle 17 mesure l'angle $\theta_k$, dans le plan de l'étage, entre la direction de déplacement de l'appareil 10 et la direction X. A cet effet, on peut utiliser les mesures du gyromètre 19 et du magnétomètre 20. Par la suite, la direction mesurée à l'instant $t_k$ est appelée « direction $\theta_k$ ».

La centrale inertielle 17 est aussi capable de fournir une grandeur physique représentative de l'amplitude $I_k$ du déplacement de l'appareil 10 dans la direction $\theta_k$ entre les instants $t_{k-1}$ et $t_k$. A cet effet, on peut intégrer la mesure de l'accéléromètre 18 entre les instants $t_{k-1}$ et $t_k$ et, si celle-ci est nulle, conserver la précédente vitesse mesurée $V_{k-i}$. Toutefois, dans le cas d'un piéton qui marche sur un plancher horizontal, pour obtenir un estimation plus précise de l'amplitude $I_k$, le calculateur 14 détecte à partir des mesures de l'accéléromètre 18 l'instant où un pied du piéton 4 entre en contact avec le plancher. A partir de ces instants successifs, le calculateur 14 calcule une fréquence $f_k$ des pas du piéton 4. Puis l'amplitude $I_k$ du déplacement du piéton 4 dans la direction $\theta_k$ est calculée en utilisant le modèle de pas suivant : $I_k = Af_k + BT + C$, où A, B, C et T sont des coefficients constants et indépendant des mesures de la centrale inertielle 17. De plus, les coefficients A, B et C sont des coefficients indépendants des caractéristiques morphologiques du piéton. Par contre, le coefficient T doit être choisi égal à la taille du piéton 4. Par défaut, le coefficient T est pris égal à la taille moyenne d'un être humain, par exemple 1,78 m. La vitesse $v_k$ de déplacement de l'appareil 10 entre les instants $t_{k-1}$ et $t_k$ est obtenue à l'aide de la relation suivante : $v_k = I_k/\Delta t$, où $\Delta t$ est la durée de l'intervalle de temps entre $t_{k-1}$ et $t_k$. Typiquement, $\Delta t$ est choisi égal à la durée d'un pas du piéton 4.

Ainsi, lorsque le piéton 4 se déplace en marchant sur le plancher de l'étage 8, une loi de déplacement est donnée par les relations suivantes :

$$x^i_k = x^i_{k-1} + v_k \times \Delta t \times \cos\theta_k ;$$

$$y^i_k = y^i_{k-1} + v_k \times \Delta t \times \sin\theta_k,$$

où $(x^i_k, y^i_k)$ et $(x^i_{k-1}, y^i_{k-1})$ sont les coordonnées, dans le plan du plancher, des positions $P^i_k$ et $P^i_{k-1}$ de la particule $S^i$.

Dans le cas d'un procédé de localisation de l'appareil 10 mettant en oeuvre un filtre à particules, il est intéressant d'explorer le plus grand nombre possible de trajectoires avec les particules. Ainsi, classiquement, le déplacement de chaque particule est perturbé de façon aléatoire. Par exemple, pour cela, la loi de déplacement utilisable est la suivante :

$$x^i_k = x^i_{k-1} + v_k \times \Delta t \times \cos\theta_k + \mu^i_x ;$$

$$y^i_k = y^i_{k-1} + v_k \times \Delta t \times \sin\theta_k + \mu^i_y ;$$

où $\mu^i_x$ et $\mu^i_y$ sont des variables aléatoires.

A chaque instant $t_k$ et pour chaque particule $S^i$, les valeurs de ces variables $\mu^i_x$ et $\mu^i_y$ sont tirées au sort en fonction d'une loi prédéfinie de probabilité centrée, c'est-à-dire caractérisée par une espérance mathématique nulle.

Ainsi, la moyenne des valeurs de chaque variable aléatoire $\mu^i_x$ et $\mu^i_y$ aux différents instants successifs $t_k$ tend vers zéro lorsque k augmente. Par exemple, cette loi prédéfinie de probabilité est la même pour les variables aléatoires $\mu^i_x$ et $\mu^i_y$ et pour toutes les particules $S^i$. Par la suite, elle est notée $Lp_{xy}$. Cette loi $Lp_{xy}$ est caractérisée par un écart type $\sigma_{xy}$ prédéterminé. Ici, l'écart type $\sigma_{xy}$ est constant et indépendant des mesures de la centrale inertielle 17 pour une mise à jour à chaque pas. Par exemple, l'écart type $\sigma_{xy}$ est supérieur à 5 cm ou 10 cm et, de préférence, inférieur à 35 cm. Par exemple, la loi $Lp_{xy}$ est une distribution uniforme ou une distribution gaussienne.

Dans la réalité, il peut aussi exister un biais de mesure, appelé biais de direction, sur la mesure de la direction $\theta_k$. Un tel biais de direction peut provenir d'un défaut sur les capteurs de la centrale inertielle 17. Ce biais de direction peut aussi être causé par le fait que le piéton 4 tourne l'appareil 10 dans un plan horizontal. De façon similaire, il peut aussi exister un biais de mesure, appelé ici biais de pas, sur la mesure de l'amplitude $I_k$ du déplacement de l'appareil 10. Ce biais de pas peut provenir d'un défaut des capteurs de la centrale inertielle. Dans l'exemple décrit ici, il peut aussi provenir d'une erreur de modélisation et plus précisément d'une erreur par rapport à la valeur par défaut du coefficient T dans le modèle de pas. En effet, la véritable taille du piéton 4 est inconnue. Ainsi, si le piéton 4 est beaucoup plus petit ou beaucoup plus grand que 1,78 m, cela introduit un biais de pas systématique sur la mesure de l'amplitude $I_k$. Typiquement, ces biais sont constants au moins pendant un intervalle de temps assez long pour pouvoir les estimer et les corriger comme décrit par la suite.

Ici, pour compenser et corriger ces biais de direction et de pas, la loi de déplacement utilisée intègre des facteurs correctifs, respectivement $\alpha^i$ et $\varepsilon^i$ associés à chaque particule $S^i$. Par exemple, la loi de déplacement est donnée par les relations suivantes :

$$x^i_k = x^i_{k-1} + v_k \times \Delta t \times (1+\varepsilon^i_k) \times \cos(\theta_k + \alpha^i_k) + \mu^i_x \; ;$$

$$y^i_k = y^i_{k-1} + v_k \times \Delta t \times (1+\varepsilon^i_k) \times \sin(\theta_k + \alpha^i_k) + \mu^i_y \; ;$$

$$\varepsilon^i_k = \varepsilon^i_{k-1} + \mu^i_\varepsilon \; ;$$

$$\alpha^i_k = \alpha^i_{k-1} + \mu^i_\alpha \; ;$$

où

- $\varepsilon^i_k$ et $\varepsilon^i_{k-1}$ sont les valeurs, respectivement aux instants $t_k$ et $t_{k-1}$, du facteur correctif $\varepsilon^i$ utilisé pour corriger le biais de pas, et
- $\alpha^i_k$ et $\alpha^i_{k-1}$ sont les valeurs, respectivement aux instants $t_k$ et $t_{k-1}$, du facteur correctif $\alpha^i$ utilisé pour corriger le biais de direction,
- $\mu^i_\varepsilon$ et $\mu^i_\alpha$ sont des variables aléatoires.

Les variables aléatoires $\mu^i_\varepsilon$ et $\mu^i_\alpha$ sont utilisées pour les mêmes raisons et de la même manière que les variables $\mu^i_x$ et $\mu^i_y$ précédemment introduites. Ainsi, une nouvelle valeur des variables $\mu^i_\varepsilon$ et $\mu^i_\alpha$ est tirée au sort à chaque nouvel instant $t_k$ et pour chaque particule $S^i$ en fonction, respectivement, d'une loi prédéfinie de probabilité $Lp_\varepsilon$ et d'une loi prédéfinie de probabilité $Lp_\alpha$. Typiquement, ces lois $Lp_\varepsilon$ et $Lp_\alpha$ sont les mêmes pour toutes les particules $S^i$. Ici, les espérances mathématiques des lois $Lp_\varepsilon$ et $Lp_\alpha$ sont égales à zéro. Par conséquent, comme pour les variables aléatoires $\mu^i_x$ et $\mu^i_y$, la moyenne des valeurs de chaque variable aléatoire $\mu^i_\varepsilon$ et $\mu^i_\alpha$ aux différents instants successifs $t_k$ tend vers zéro lorsque k augmente.

De plus, la fonction des variables $\mu^i_\varepsilon$ et $\mu^i_\alpha$ est seulement de venir légèrement perturber les précédentes valeurs $\varepsilon^i_{k-1}$ et $\alpha^i_{k-1}$, des facteurs correctifs $\varepsilon^i$ $\alpha^i$ pour que les valeurs des facteurs correctifs $\varepsilon^i$ et $\alpha^i$ restent stables dans le temps. A cet effet, les écarts types $\sigma_\varepsilon$ et $\sigma_\alpha$, respectivement, des lois $Lp_\varepsilon$ et $Lp_\alpha$, ne permettent pas une variation rapide des valeurs des facteurs correctifs $\varepsilon^i$ et $\alpha^i$. Ici, a cet effet, l'écart type $\sigma_\varepsilon$ est choisi suffisamment petit pour que le ratio $\sum\sigma_{\varepsilon k}/T$ soit inférieur à 10 %/s et, de préférence, inférieur à 5 %/s ou 1 %/s, où :

- $\sigma_{\varepsilon k}$ est l'écart type de la loi $Lp_\varepsilon$ lors de la k-ième itération de l'étape 96,
- $\sum\sigma_{\varepsilon k}$ est la somme des écarts types $\sigma_{\varepsilon k}$ entre la q-ième itération et la p-ième itération de l'étape 96, où q est un entier strictement inférieur à p,
- T est la durée en seconde de l'intervalle de temps qui s'est écoulé entre la q-ième et la p-ième itération de l'étape 96.

L'étape 96 est l'étape lors de laquelle les coordonnées de la particule $S^i$ sont mises à jour. Cette étape est décrite plus en détail en référence à la figure 4. Ici, l'écart type $\sigma_\varepsilon$ est constant. Ainsi, le précédent ratio peut aussi s'écrire : $(p-q)\sigma_\varepsilon/T$. Dans ce cas, quels que soient p et q, le ratio est constant. La différence p-q est généralement assez grande pour couvrir une période de temps supérieure à 1 s ou 4s et, généralement, inférieure à 10 min ou 5 min ou 1 min. Par exemple, cette différence entre p et q est constante quel que soit p.

De façon similaire, l'écart type $\sigma_\alpha$ est choisi suffisamment petit pour que le ratio $\sum\sigma_{\alpha k}/T$ soit inférieur à 10°/s et, de préférence, inférieur à 5°/s ou 1°/s, où :

- $\sigma_{\alpha k}$ est l'écart type de la loi $Lp_\alpha$ lors de la k-ième itération de l'étape 96,
- $\sum\sigma_{ak}$ est la somme des écarts types $\sigma_{\alpha k}$ entre la q-ième itération et la p-ième itération de l'étape 96, où q est un entier strictement inférieur à p,
- T est la durée en seconde de l'intervalle de temps qui s'est écoulé entre la q-ième et la p-ième itération de l'étape 96.

Ici, l'écart type $\sigma_\alpha$ est aussi constant. Ainsi, le précédent ratio peut aussi s'écrire : $(p-q)\sigma_\alpha/T$.

Comme pour les variable $\mu^i_x$ et $\mu^i_y$, les variables $\mu^i_\varepsilon$ $\mu^i_\alpha$ permettent d'explorer un grand nombre de valeurs possibles pour les facteurs correctifs $\varepsilon^i$ et $\alpha^i$.

La loi de déplacement décrite ci-dessus, est appelée par la suite première loi de déplacement. Cette première loi de déplacement fonctionne dans la plupart des situations où le piéton 4 marche sur un sol horizontal. Par contre, dans certains cas particuliers, il existe d'autres lois de déplacement plus précises. Par exemple, la zone 35 est une cage d'escalier comportant un escalier 50. Dans cette zone 35, la longueur des pas du piéton 4 est imposée par la profondeur $L_m$ des marches de cet escalier 50. Ainsi, dans la zone 35, il est préférable d'utiliser une seconde loi de déplacement. Ici, cette seconde loi de déplacement est identique à la première loi de déplacement sauf que le produit $v^i_k \times \Delta t \times (1 + \varepsilon^i_k)$ est remplacé par la variable mesurée $n^i_k$. La variable $n^i_k$ est donnée par la relation suivante : $n^i_k = (Ent(|z^i_k - z^i_{k-1}|/H_m)) \times L_m$, où :

- $z^i_{k-1}$ et $z^i_k$ sont les hauteurs de l'appareil 10 mesurées par la centrale inertielle 17, respectivement, aux instants $t_{k-1}$ et $t_k$,
- $H_m$ est la hauteur constante d'une marche de l'escalier 50,
- $L_m$ est la profondeur d'une marche de l'escalier 50,
- $|z^i_k - z^i_{k-1}|$ est la fonction qui retourne la valeur absolue de la différence entre $z^i_k$ et $z^i_{k-1}$, et
- Ent (...) est la fonction qui retourne la partie entière de $|z^i_k - z^i_{k-1}| / H_m$.

Ici, on suppose que la hauteur $H_m$ et la profondeur $L_m$ sont connues à l'avance et enregistrées dans la carte 16.

Les valeurs des variables mesurées $z_k$ et $z_{k-1}$ sont obtenues, typiquement, à partir des mesures du baromètre 21. Ici, seule la zone 35 est associée à cette seconde loi de déplacement. Toutes les autres zones de l'étage 8 sont associées à la première loi de déplacement.

A l'intérieur du bâtiment 2, il existe des zones telles que les zones 30, 31, 33 et 34 dans lesquelles le piéton 4 peut librement se déplacer dans toutes les directions. Autrement dit, dans ces zones, on considère que toutes les directions de déplacement sont équiprobables. Dans ce cas, ces zones sont dépourvues de direction privilégiée de déplacement. A l'inverse, il existe des zones du bâtiment 2 où toutes les directions de déplacement ne sont pas équiprobables. Par exemple, la zone 32 est un long couloir parallèle à la direction X. Dans cette zone 32, les directions les plus probables de déplacement pour un piéton sont parallèles à la direction X. En effet, il est moins probable que le piéton 4 se déplace transversalement à la direction longitudinale du couloir. Dans ce cas, on dit qu'il existe une direction privilégiée de déplacement dans cette zone 32. Ici, chaque direction privilégiée est codée par un angle $\gamma$, dans le plan du plancher, entre cette direction privilégiée et la direction X. De plus, dans ce mode de réalisation, on associe également à chaque direction privilégiée une tolérance angulaire $\sigma_\gamma$. Cette tolérance angulaire est généralement exprimée en degré ou en radiant. Par exemple, dans le cas de la zone 32, l'angle $\gamma = 0°$ et la tolérance angulaire $\sigma_\gamma = \pm 30°$. Dans le mode de réalisation décrit ici, la zone 35 est également associée à une direction privilégiée pour monter et descendre l'escalier 50. Pour cette direction privilégiée, l'angle $\gamma = 90°$ et la tolérance angulaire $\sigma_\gamma$ est égale à $\pm 20°$.

Le fonctionnement de l'appareil 10 va maintenant être décrit en référence au procédé de la figure 4.

Pour localiser la position de l'appareil 10 à l'intérieur du bâtiment 2, l'unité 11 implémente un algorithme de localisation connu sous le terme de « filtre à particules ». Le fonctionnement d'un filtre à particules est bien connu. Par exemple, le lecteur peut se référer à l'état de l'art cité dans l'introduction de cette demande de brevet et, en particulier, à Straub 2010. Ainsi, par la suite, seules les nouvelles spécificités d'implémentation de cet algorithme sont décrites en détail. En particulier, la gestion des changements d'étages est réalisée, par exemple, comme décrit dans Straub 2010.

Le procédé débute par une étape 90 lorsque la localisation de l'appareil 10 est déclenchée. Par exemple, la localisation est déclenchée manuellement par le piéton 4 en interagissant avec l'interface homme-machine de l'appareil 10. Le calculateur 14 génère alors un jeu initial de $N_0$ particules $S^i$, où i est un identifiant de la particule permettant de la distinguer parmi l'ensemble des autres particules générées. Le nombre $N_0$ de particules $S^i$ dépend notamment des connaissances initiales que l'on a sur la position de l'appareil 10 dans le bâtiment 2 et de la surface de ce bâtiment. Typiquement, $N_0$ est supérieur à 10 ou 100. $N_0$ est également généralement inférieur à 5000 ou 1000. Chaque particule $S^i$ est associée initialement :

- à une position initiale $P^i_0$ à l'intérieur du bâtiment 2, cette position $P^i_0$ comportant les coordonnées $x^i_0$, $y^i_0$ et $z^i_0$ de la particule $S^i$ dans le repère XYZ,
- à une valeur initiale $w^i_0$ du poids $w^i$ représentant la probabilité que l'appareil 10 se trouve à l'emplacement de cette particule $S^i$ à l'instant $t_0$,
- à une valeur initiale $\alpha^i_0$ pour le facteur correctif $\alpha^i$, et
- à une valeur initiale $\varepsilon^i_0$ pour le facteur correctif $\varepsilon^i$.

Lors de l'étape 90, la position initiale $P^i_0$ et les valeurs initiales $w^i o$, $\alpha^i_0$ et $\varepsilon^i_0$ sont initialisées. De nombreuses méthodes pour initialiser les positions $P^i_0$ et les valeurs $w^i_0$ de chaque particule sont connues. Par exemple, si la position initiale de l'appareil 10 est connue à plus ou moins 1 m près, les valeurs $P^i_0$ de toutes les particules $S^i$ sont tirées au hasard à l'intérieur d'un cercle centré sur la position connue et de rayon égale à 1 m. On peut aussi prendre chaque valeurs $w^i_0$ égale à $1/N_0$, où $N_0$ est le nombre initial de particules générées.

Chaque valeur $\alpha^i_0$ est tirée au hasard de manière à ce que la distribution des valeurs initiales $\alpha^i_0$ suive une loi $Lp_{\alpha 0}$ de probabilité prédéterminée telle qu'une distribution uniforme ou gaussienne ou autre. La loi $Lp_{\alpha 0}$ n'est généralement pas la même que la loi $Lp_\alpha$ utilisée pour obtenir les valeurs de la variable aléatoire $\mu^i_\alpha$. C'est la connaissance a priori que l'on a sur la distribution du biais de direction qui permet de choisir la loi de probabilité des valeurs initiales $\alpha^i_0$ qui ressemble le plus à celle observée dans la réalité. Par exemple, c'est aussi cette connaissance à priori sur la répartition des biais de direction qui permet de fixer la valeur de l'écart type $\sigma_{\alpha 0}$ de la loi $Lp_{\alpha 0}$. Par exemple, l'écart type $\sigma_{\alpha 0}$ est choisi égale à 360° si l'on a aucune information sur le biais de direction. Dans un autre exemple, l'écart type $\sigma_{\alpha 0}$ est choisi inférieur à 45° si l'on a quelques informations sur le biais de direction. Contrairement au cas des variables aléatoires précédentes, cette loi de probabilité $Lp_{\alpha 0}$ n'a pas nécessairement une moyenne nulle.

Chaque valeur initiale $\varepsilon^i_0$ est choisie comme décrit précédemment pour les valeurs initiales $\alpha^i_0$ sauf que l'on utilise une loi prédéfinie $Lp_{\varepsilon 0}$ de probabilité pour le biais de pas à la place de la loi $Lp_{\alpha 0}$. De plus, la loi de probabilité $Lp_{\varepsilon 0}$ n'est pas nécessairement identique à la loi $Lp_{\alpha 0}$. En effet, généralement, les biais de direction et de pas ne sont pas corrélés. Typiquement, l'écart type $\sigma_{\varepsilon 0}$ de la loi $Lp_{\varepsilon 0}$ est égale 30 % à plus ou moins 5 % près si l'on a aucune information sur le biais de pas. Dans un autre exemple, l'écart type $\sigma_{\varepsilon 0}$ est choisi inférieur à 20 % si l'on a quelques informations sur le biais de pas.

Ensuite, lors d'une étape 92, la centrale inertielle 17 transmet ses mesures au calculateur 14 qui les reçoit. A partir de ces mesures, le calculateur 14 calcule la vitesse $v_k$ et l'angle $\theta_k$ du déplacement actuel de l'appareil 10 depuis sa dernière position. Ici, des nouvelles mesures de la vitesse $v_k$ et de l'angle $\theta_k$ sont calculées à chaque fois que le calculateur détecte qu'un pied du piéton vient de toucher le plancher.

Lors d'une étape 94, pour chaque particule $S^i$, le calculateur 14 identifie la zone à l'intérieur de laquelle elle est actuellement située. Pour cela, pour chaque particule $S^i$, le calculateur compare la dernière position connue $P^i_{k-1}$ de cette particule à la périphérie de chaque zone de la carte 16. Par exemple, dans le cas de zones rectangulaires alignées avec le repère XYZ, le calculateur 14 teste si les deux inégalités suivantes sont vérifiées : $x_{Aj} \le x^i_{k-1} \le x_{Bj}$ et $y_{Aj} \le y^i_{k-1} \le y_{Bj}$, où :

- l'indice j est un identifiant de la zone de la carte 16 permettant de la distinguer des autres zones,
- $x_{Aj}$ et $y_{Aj}$ sont les coordonnées du sommet de la zone j le plus proche de l'origine du repère XYZ, et
- $x_{Bj}$ et $y_{Bj}$ sont les coordonnées du sommet de zone j le plus éloigné de l'origine du repère XYZ.

Si ces deux inégalités sont vérifiées, alors la particule $S^i$ appartient à la zone j. De préférence, le calculateur 14 teste d'abord si la particule $S^i$ appartient à la même zone que celle à laquelle elle appartenait précédemment. Si une particule $S^i$ n'appartient à aucune zone, alors un traitement particulier est déclenché. Par exemple, cette particule est supprimée.

Lors d'une étape 96, une fois que la zone à laquelle appartient chaque particule $S^i$ a été identifiée, chaque particule est déplacée de manière corrélée avec le déplacement mesuré de l'appareil 10 depuis sa précédente position $P^i_{k-1}$ jusqu'à une nouvelle position $P^i_k$. Pour cela, les coordonnées de chaque particule $S^i$ sont mises à jour en fonction :

- des dernières mesures reçues de la centrale inertielle 17,
- des coordonnées de la précédente position $P^i_{k-1}$ de cette particule, et
- de la loi de déplacement associée à la zone à l'intérieur de laquelle la particule $S^i$ se situe.

La loi de déplacement à utiliser est donc celle associée à la zone identifiée lors de l'étape 94.

Par exemple, si la particule $S^i$ se situe à l'intérieur de l'une des zones 30 à 34, alors les coordonnées de la nouvelle position $P^i_k$ sont établies en utilisant la première loi de déplacement. Par contre, si la particule $S^i$ se situe à l'intérieur de la zone 35, alors les coordonnées de la nouvelle position $P^i_k$ sont établies en utilisant la seconde loi de déplacement.

A chaque nouvelle exécution de l'étape 96, les nouvelles valeurs pour les variables $\mu^i_x$, $\mu^i_y$, $\mu^i_\alpha$ et $\mu^i_\varepsilon$ sont tirées au sort à l'aide des lois, respectivement, $Lp_{xy}$, $Lp_\alpha$ et $Lp_\varepsilon$.

Lors d'une étape 98, le calculateur 14 met à jour les poids $w^i$ de chaque particule $S^i$. Plus précisément, le calculateur 14 diminue le poids $w^i$ de la particule $S^i$ si son dernier déplacement de la position $P^i_{k-1}$ à la position $P^i_k$ a enfreint des contraintes prédéfinies associées à la zone à l'intérieur de laquelle elle se situe.

Typiquement, pour chaque particule $S^i$, le calculateur vérifie ici les contraintes suivantes ;

- contrainte 1) : le segment $[P^i_{k-1} ; P^i_k]$ ne doit pas traverser un obstacle infranchissable de la zone à l'intérieur de laquelle se situe cette particule $S^i$ ;
- contrainte 2) : la direction du déplacement de la position $P^i_{k-1}$ à la position $P^i_k$ est conforme à la direction privilégiée de déplacement associée à la zone à l'intérieur de laquelle se situe la particule $S^i$.

De façon générale, ici on définit une contrainte sur le déplacement de la particule $S^i$ comme étant une condition qui, si elle est vérifiée par la particule $S^i$, est utilisée pour augmenter le poids $w^i$ de cette particule $S^i$ par rapport au poids des particules qui ne vérifient pas cette condition. A l'inverse si cette condition n'est pas vérifiée par la particule Si, alors elle est utilisé pour diminuer le poids $w^i$ de cette particule S'par rapport aux poids des particules qui vérifient cette condition.

Pour évaluer la contrainte 1), pour chaque particule $S^i$, le calculateur 14 recherche s'il existe une intersection entre le segment $[P^i_{k-1} ; P^i_k]$ et chaque obstacle infranchissable de la zone à l'intérieur de laquelle se situe la particule. Cette zone a été identifiée lors de l'étape 94. Cette recherche d'intersection est réalisée uniquement avec les obstacles infranchissables dont les identifiants sont contenus dans la liste associée à la zone identifiée. Ici, puisque chaque obstacle est codé par un segment, cette recherche d'intersection revient à rechercher une intersection entre deux segments.

S'il existe une intersection, alors, une valeur très faible ou nulle est affectée au poids $w^i$. Une valeur très faible est une valeur inférieure à 0,2 ou 0,1 par exemple. Dans le cas contraire, la valeur du poids $w^i$ reste inchangée.

Si la zone à l'intérieur de laquelle se situe la particule $S^i$ n'est pas associée à une direction privilégiée, alors la contrainte 2) n'est pas utilisée pour mettre à jour le poids $w^i$. Dans le cas contraire, la contrainte 2) est utilisée. Pour évaluer la contrainte 2), le calculateur 14 calcule un poids $w^i_\theta$ à partir de l'écart entre la direction mesurée $\theta_k$ pour le déplacement de la particule $S^i$ et la direction privilégiée de la zone à l'intérieur de laquelle elle se situe. La valeur du poids $w^i_\theta$ est d'autant plus grande que l'écart angulaire entre la direction privilégiée $\gamma$ et la direction de déplacement de la position $P^i_{k-1}$ et $P^i_k$ est faible. De plus, ici, la valeur du poids $w^i_\theta$ est établie en tenant compte de la tolérance $\sigma_\gamma$ associée à cette direction privilégiée. La valeur du poids $w^i_\theta$ est donc plus grande si l'écart angulaire entre la direction de déplacement de la particule $S^i$ et la direction privilégiée est compris dans la marge de tolérance définie par la valeur de $\sigma_\gamma$ et, dans le cas contraire, la valeur du poids $w^i_\sigma$ est plus petite.

Par exemple, ici, la valeur du poids $w^i_\sigma$ est calculée avec la relation suivante : $w^i_\sigma = p \times \exp[(\theta_k + \alpha^i_{k} - \gamma)^2/(2\sigma_\gamma^2)]$, où p est un coefficient constant prédéfini. On remarquera qu'on utilise aussi la valeur $\alpha^i_k$ du facteur correctif $\alpha^i$ du biais de direction pour calculer ce poids $w^i_\sigma$.

Ensuite, la valeur du poids $w^i$ est prise égale à sa précédente valeur multipliée par la valeur du poids $w^i_\theta$ ainsi obtenue.

Lors d'une étape 100, le calculateur 14 procède à la normalisation des poids $w^i$ de toutes les particules S'pour que la somme de tous ces poids soit égale à un. Par exemple, le calculateur 14 calcule la somme W de tous les poids $w^i$ puis divise chaque poids $w^i$ par la somme W.

Lors d'une étape 102, le calculateur 14 ré-échantillonne les particules $S^i$. Cette étape de ré-échantillonnage consiste à supprimer les particules dont les poids $w^i$ sont devenus trop faibles pour les remplacer par des particules associées à des paramètres dont les poids sont plus forts.

De nombreuses techniques de ré-échantillonnage sont connues. Par exemple, ici, on applique la méthode SIR (Sequential Importance Resampling) décrite dans le livre suivant : B. Ristic, S. Arulampalam, N. Gordon, "Beyond the Kalman Filter, particle filter for tracking applications", Artech House, 2004.

En résumé, cette méthode de ré-échantillonnage consiste d'abord à classer les particules en deux groupes : les particules à régénérer, c'est-à-dire toutes les particules dont le poids est inférieur à un seuil prédéterminé et les particules survivantes, c'est-à-dire les autres particules.

Ensuite, pour chaque particule à régénérer, le calculateur 14 supprime l'ancienne particule puis génère une nouvelle particule pour la remplacer. Pour générer une nouvelle particule, le calculateur 14 tire aléatoirement une particule dans le groupe des particules survivantes. Ce tirage au sort est réalisé de préférence de telle sorte que la probabilité d'être tiré soit proportionnelle au poids de la particule survivante.

Ensuite, la position $P^i_k$ et les valeurs $\alpha^i_k$ et $\varepsilon^i_k$ de la particule survivante tirée sont affectées à la nouvelle particule générée. Lors de cette étape, de préférence, le calculateur ajoute une perturbation aléatoire sur la position et sur les valeurs des facteurs correctifs en utilisant, par exemple, les variables aléatoires $\mu_x$, $\mu_y$, $\mu_\alpha$ et $\mu_\varepsilon$. Toutefois, ces perturbations sont calibrées de manière à ce que les valeurs $\alpha^i_k$ et $\varepsilon^i_k$ affectées à la particule générée restent très proches des valeurs actuelles pour les facteurs correctifs associés à la particule survivante tirée. Typiquement, la moyenne des valeurs $\alpha^i$k affectées aux particules générées est plus proche de la moyenne des valeurs $\alpha^i_k$ des particules survivantes que de la moyenne des valeurs $\alpha^i_k$ des particules supprimées. Il en est de même pour les valeurs affectées aux particules générées.

Un nouveau poids est également affecté à chaque particule générée et, éventuellement, à la particule survivante dont elle est issue.

Lors d'une étape 104, le calculateur 14 estime la position PA de l'appareil 10 à partir des positions $P^i_k$ et des poids $w^i$ de toutes les particules $S^i$. De nombreuses méthodes sont possibles pour faire cela. Par exemple, la position PA est prise égale à celle de la particule $S^i$ ayant le poids $w^i$ le plus fort. Dans un autre mode de réalisation, la position PA est prise égale à la moyenne des positions $P^i_k$ des particules $S^i$ en pondérant chaque position $P^i_k$ par le poids $w^i$. Une autre méthode est également décrite dans la demande WO 2012158441.

Enfin, lors d'une étape 106, un point est affiché à la position PA sur la représentation graphique 26 de la carte 16 pour indiquer au piéton 4 sa position sur cette carte et donc sa position à l'intérieur du bâtiment 2.

Les étapes 92 à 106 sont réitérées en boucle. Au fur et à mesure de ces itérations, la précision de l'estimation de la position de l'appareil 10 augmente car seules les positions $P^i_k$ les plus probables sont conservées.

En parallèle de l'étape 104, lors d'une étape 108, le calculateur 14 calcule une estimation $E_\alpha$ du biais de direction et une estimation $E_\varepsilon$ du biais de pas à partir, respectivement, des valeurs $\alpha^i_k$ et actuelles des particules $S^i$. Par exemple, l'estimation $E_\alpha$ est prise égale à la moyenne des valeurs actuelles $\alpha^i_k$ de toutes les particules $S^i$. De façon similaire, la valeur de l'estimation $E_\varepsilon$ est prise égale à la moyenne des valeurs actuelles $\varepsilon^i_k$ de toutes les particules $S^i$.

La précision des estimations $E_\alpha$ et $E_\varepsilon$ augmente au fur et à mesure des réitérations des étapes 92 à 106. En effet, il est très probable que la particule $S^i$ associée à une valeur actuelle incorrecte pour le facteur correctif $\alpha^i$ ou $\varepsilon^i$ enfreigne rapidement les contraintes évaluées lors de l'étape 98. Dès lors, les particules $S^i$ associées à des valeurs actuelles incorrectes pour les facteurs correctifs sont préférentiellement supprimées lors de l'étape 102. Ainsi, au fur et à mesure des itérations des étapes 92 à 106, les particules $S^i$ associées à des valeurs actuelles correctes pour les facteurs correctifs sont préférentiellement sélectionnées comme particules survivantes lors de l'étape 102. Dès lors, les estimations $E_\alpha$ et $E_\varepsilon$ convergent vers les véritables valeurs des biais de direction et de pas.

De plus, puisque les valeurs des facteurs correctifs $\alpha^i$ et $\varepsilon^i$ convergent vers les véritables valeurs des biais de direction et de pas au fur et à mesure des itérations des étapes 92 à 106, les facteurs correctifs corrigent de plus en plus précisément ces biais de direction et de pas. Dès lors, la présence de ces facteurs correctifs dans la loi de déplacement permet d'augmenter sensiblement la précision de l'estimation de la position PA même en présence de tels biais de direction et de pas.

Les estimations $E_\varepsilon$ et $E_\alpha$ peuvent être affichées sur l'écran 24 ou utilisées par d'autres applications pour corriger les biais de direction et de pas.

De nombreux autres modes de réalisation sont possibles. Par exemple, certains capteurs plus sophistiqués fournissent une valeur moyenne de la variable mesurée à un instant k ainsi qu'un écart-type sur cette mesure (voir par exemple Straub 2010). Dans ce cas, les valeurs mesurées de l'angle $\theta_k$ et de l'amplitude $I_k$ sont obtenues en tirant au hasard les valeurs en utilisant une loi de probabilité gaussienne dont la moyenne et l'écart-type sont égaux à ceux transmis par les capteurs. Cela permet notamment de prendre en compte le bruit de mesure.

Ce qui a été décrit précédemment dans le cas particulier où c'est un piéton qui porte directement l'appareil 10 peut aussi être adapté à d'autres situations. Par exemple, l'appareil 10 peut être fixé sur un chariot poussé par le piéton. Dans ce cas, la vitesse $v_k$ est obtenue en intégrant l'accélération mesurée par le chariot. Une autre solution consiste à détecter la fréquence des chocs qui se produisent à chaque fois qu'une roue du chariot roule sur un joint entre deux carreaux d'un revêtement de sol . Le procédé de localisation décrit s'applique également au cas où l'appareil 10 est transporté par un robot motorisé qui se déplace sans l'aide du piéton 4. Dans ce cas, l'amplitude du déplacement peut être mesurée en mesurant le nombre de tours de roue d'une roue motrice du robot.

Le procédé précédemment décrit s'applique à tout type d'espace tridimensionnel où l'appareil 10 peut être déplacé. Par exemple, il peut aussi s'agir d'un espace situé en plein air et en dehors de tout bâtiment. Par exemple, ce procédé est utile pour localiser une personne dans un lieu où une localisation par GPS ou à partir de relais téléphonique est impossible.

D'autres façons de coder les contraintes sur le déplacement de l'appareil 10 existent et sont utilisables dans le procédé précédent. Par exemple, plutôt que d'enregistrer la position des murs, il est possible d'enregistrer tous les trajets possibles. Si le déplacement d'une particule ne suit pas l'un de ces trajets possibles, alors son poids est diminué. Un tel mode de réalisation est décrit plus en détail dans la demande WO 2012158441 et dans la demande US 8548738.

Plutôt que d'enregistrer la position des murs, il est aussi possible d'enregistrer la position des portes. Dans ce dernier cas, le poids d'une particule est augmenté si celle-ci passe d'une pièce à une autre en traversant une porte. Un tel mode de réalisation est décrit plus en détail dans Straub 2010.

D'autres contraintes prédéfinies peuvent être utilisées pour mettre à jour la valeur du poids $w^i$. Par exemple, si une mesure approximative de la position de l'appareil 10 est disponible en utilisant d'autres informations, alors le poids $w^i$ est augmenté si la position $P^i_k$ est proche de cette position approximative et, au contraire, diminuée si la position $P^i_k$ est éloignée de cette position approximative. Par exemple, la position approximative est obtenue à partir de la puissance d'un signal radioélectrique reçu par l'appareil 10 et de la position connue dans le repère XYZ de l'émetteur de ce signal radioélectrique. Par exemple, l'émetteur est une borne Wi-Fi.

Bien que la contrainte consistant à tester la collision d'une particule avec un obstacle infranchissable soit, en pratique, la plus souvent utilisée, celle-ci n'est pas absolument nécessaire s'il existe d'autres contraintes prédéfinies telles que celles précédemment décrites qui peuvent être utilisées.

En variante, l'étape 100 de normalisation du poids $w^i$ des particules $S^i$ est omise.

Lors du ré-échantillonnage des particules, de nombreux autres algorithmes pour déterminer la position initiale des particules régénérées sont connus et peuvent être utilisés à la place de celui décrit précédemment. Par exemple, l'algorithme KLD (Kullbak-Leibler-Divergence) peut être utilisé.

De même, d'autres algorithmes sont possibles pour associer à chaque particule régénérée, une nouvelle valeur actuelle $\alpha^i_k$ et Chaque nouvelle valeur $\alpha^i_k$ est fonction d'une ou plusieurs des valeurs $\alpha^i_k$ associées aux particules qui n'ont pas été supprimées et indépendante des valeurs $\alpha^i_k$ associées aux particules qui ont été supprimées. Il en est de-même pour la nouvelle valeur $\varepsilon^i_k$.

Dans une variante simplifiée, l'étape 102 de ré-échantillonnage est omise. Même si l'on ne procède pas au ré-échantillonnage, le procédé ci-dessus permet d'accroître la précision de la localisation de la positon de l'appareil 10 car le poids $w^i$ de chaque particule $S^i$ associée à une valeur actuelle $\alpha^i_k$ ou incorrecte diminue au fur et à mesure des itérations des étapes 92 à 104.

D'autres méthodes pour déterminer si une particule est située à l'intérieur d'une zone sont possibles. Par exemple, Straub 2010 décrit une méthode alternative utilisable dans le cas de zones polygonales de forme plus compliquée qu'un simple rectangle.

D'autres formes de zones que des polygones sont possibles. Par exemple, une zone peut avoir la forme d'un cercle. Dans ce cas, les coordonnées de son centre et de son rayon sont enregistrées dans la carte 16. Il n'existe en réalité pas de limitation sur la forme d'une zone à partir du moment où les coordonnées de la périphérie de cette zone peuvent être déterminées dans le repère XYZ.

Le procédé précédent a été décrit dans le cas particulier où chaque zone est associée à la fois à des identifiants d'obstacle infranchissable, une loi de déplacement et une direction privilégiée. Toutefois, il arrive fréquemment que la loi de déplacement soit la même pour plusieurs zones immédiatement contiguës. Par exemple, ici, c'est le cas pour les zones 30 à 34 qui sont toutes associées à la première loi de déplacement. Dans ce cas, il peut être plus intéressant d'enregistrer dans la carte 16 plusieurs strates empilées de zones pour un même étage. Chaque strate comporte au moins une zone et, typiquement, un ensemble de plusieurs zones recouvrant la totalité de la surface du plancher. Les zones d'une strate se distingue des zones d'une autre strate par le type de propriété qu'elle associe à cette zone. Par exemple, une première strate comporte uniquement des zones associées seulement à des identifiants d'obstacle infranchissable. Une seconde strate comporte uniquement des zones associées seulement à une loi de déplacement respective. Enfin, une troisième strate comporte seulement des zones associées uniquement à une direction privilégiée. Lorsque qu'un tel empilement de strates est appliqué à l'étage 8, les zones de la première strate sont, par exemple, identiques aux zones 30 à 35 sauf qu'elles ne comportent que les identifiants d'obstacles infranchissables. La deuxième strate se limite ici à deux zones. L'une d'elles est identique à la zone 35 sauf qu'elle est uniquement associée à la seconde loi de déplacement. L'autre zone de cette deuxième strate correspond à la réunion des zones 30 à 34 et est uniquement associée à la première loi de déplacement. La troisième strate comporte ici quatre zones. Les première et deuxième zones sont identiques, respectivement, aux zones 32 et 35 sauf qu'elles sont uniquement associées à une direction privilégiée respective. La troisième zone correspond à la réunion des zones 30 et 31 et la quatrième zone correspond alors à la réunion des zones 33 et 34 qui ne sont associées à aucune direction privilégiée.

Le fonctionnement du procédé de localisation avec une carte comportant plusieurs strates est identique à celui décrit précédemment sauf que pour chaque particule $S^i$, on identifie la zone de chaque strate à l'intérieur de laquelle elle se situe. Ensuite, ce sont ces zones à l'intérieur desquelles elle se situe qui permettent d'identifier la loi de déplacement à utiliser et les contraintes prédéfinies à tester pour mettre à jour la valeur de son poids $w^i$. L'utilisation de plusieurs strates de zones peut simplifier la définition de ces zones.

Dans une autre variante, l'une de ces strates correspond à une carte d'accessibilité telle que décrite dans Straub 2010 au chapitre 5.1.2. Toutefois, de préférence, on regroupe au sein d'une même zone les différentes cases contiguës de la carte d'accessibilité de Straub 2010 associées à la même valeur du degré $\Lambda$ d'accessibilité.

Chaque zone peut aussi être associée à des contraintes prédéfinies supplémentaires pour mettre à jour le

poids $w^i$ des particules situées dans cette zone. Par exemple, il est possible d'associer à chaque zone un coefficient $w_a$ d'accessibilité qui représente la probabilité qu'un piéton rentre dans cette zone. Ensuite, lors de la mise à jour du poids $w^i$ d'une particule $S^i$ située dans cette zone, le poids $w^i$ est pris égal à sa précédente valeur multipliée par ce coefficient $w_a$.

D'autres lois de déplacement sont utilisables. Par exemple, les écarts types $\sigma_\alpha$ et $\sigma_\varepsilon$ ne sont pas nécessairement constants. Dans ce cas, ils sont constants sur de longues durées puis modifiés pendant un bref intervalle de temps avant de revenir à leurs précédentes valeurs. Par exemple, uniquement pendant ce bref intervalle de temps, on autorise les ratios $\sum\alpha_{\varepsilon k}/T$ et/ou $\sum\sigma_{\alpha k}/T$ à dépasser les seuils précédemment définis. Typiquement, l'augmentation temporaire des valeurs des écarts types $\sigma_\alpha$ et $\sigma_\varepsilon$ est utilisée pour réinitialiser les valeurs actuelles $\alpha^i_k$ et $\varepsilon^i_k$. De façon générale, les valeurs des écarts types $\sigma_\alpha$ et $\sigma_\varepsilon$ sont constantes pendant plus de 90 % du temps d'utilisation de l'appareil 10 de manière à empêcher, pendant ces 90 % du temps, une variation rapide des valeurs des facteurs correctifs $\varepsilon^i$ et $\alpha^i$. Il est possible de vérifier que le ratio $\sum\sigma_{\varepsilon k}/T$ est maintenu inférieur à un seuil prédéterminé sur au moins 90 % du temps d'utilisation, par exemple, en prenant la différence p-q égale à une constante. Ensuite, le ratio $\sum\sigma_{\varepsilon k}/T$ est calculé pour chaque valeur de p correspondant à une itération de l'étape 96 survenue pendant ce temps d'utilisation. Si au moins 90 % des ratios ainsi calculés sont inférieurs au seuil prédéterminé, alors ce ratio est maintenu inférieur à ce seuil prédéterminé pendant plus de 90 % du temps d'utilisation. Le même calcul peut être utilisé pour le ratio $\sum\sigma_{\alpha k}/T$. Le temps d'utilisation est par exemple une période d'utilisation continue de l'appareil 10 sans arrêter d'exécuter le procédé de la figure 4.

Dans une autre variante, l'espérance de l'une des lois de probabilité $Lp_\varepsilon$ ou $Lp_\alpha$ n'est pas nulle. Cela introduit alors un biais supplémentaire qui vient s'ajouter au biais réel. La valeur actuelle $\varepsilon^i_k$ ou $\alpha^i_k$ peut aussi être calculée à partir d'une autre valeur précédente que $\varepsilon^i_{k-1}$ ou $\alpha^i_{k-1}$. Par exemple, est calculé à partir de la précédente valeur $\varepsilon^i_{k-n}$, où n est une constante strictement supérieure à un. Ainsi, il est aussi possible d'utiliser les relations suivantes pour calculer la valeur actuelle de $\varepsilon^i_k$: $\varepsilon^i_k = (\varepsilon^i_{k-1}+ \varepsilon^i_{k-2})/2 + \mu^i_\varepsilon$ ou $\varepsilon^i_k = \varepsilon^i_{k-2} + \mu^i_\varepsilon$. La même chose s'applique au calcul de la valeur actuelle $\alpha^i k$.

Par ailleurs, si l'on sait que le biais de direction est nul ou négligeable, alors la première et la seconde lois de déplacement sont simplifiées en supprimant le facteur correctif $\alpha^i$. A l'inverse, si on sait que le biais de pas est nul ou négligeable, alors la première loi de déplacement est simplifiée en supprimant le facteur correctif $\varepsilon^i$. Le facteur correctif restant dans la première loi de déplacement est ensuite estimé comme décrit précédemment en référence à la figure 4. A l'inverse, il est possible d'ajouter des facteurs correctifs supplémentaires dans la première loi de déplacement. Par exemple, si la meilleure valeur possible du coefficient A dans le modèle de pas de la première loi de déplacement n'est pas connue avec précision, on peut alors utiliser le modèle de pas suivant $l_k = \pi Af_k + BT + C$ , où $\pi$ est un facteur correctif supplémentaire. La valeur du facteur $\pi$ est alors estimée de la même façon que ce qui a été décrit pour les facteurs correctifs $\alpha^i$ et $\varepsilon^i$. On remarquera que dans le cas du facteur correctif $\pi$, celui-ci est un facteur multiplicatif et non pas un facteur soustractif, c'est-à-dire qu'il multiplie la variable mesurée $f_k$.

D'autres lois de déplacement que celles précédemment décrites peuvent être utilisées. Par exemple, une loi de déplacement spécifiquement adaptée au déplacement sur un escalator ou sur un tapis roulant ou dans un ascenseur peuvent aisément être conçues et associées à la zone comportant cet escalator, ce tapis roulant ou cet ascenseur. De plus, s'il existe un biais de mesure dans ces zones particulières, alors il est souhaitable d'introduire un facteur correctif dans la loi de déplacement pour compenser ce biais de mesure. Si initialement, la valeur de ce facteur correctif n'est pas connue, alors cette valeur est estimée de la même manière que ce qui a été décrit pour les facteurs correctifs $\alpha^i$ et $\varepsilon^i$.

L'étape 106 ou 108 n'est pas nécessairement réalisée après chaque itération des étapes 92 à 104. Par exemple, ces étapes ne sont réalisées qu'une fois sur deux.

Les modes de réalisation précédents ont été décrits dans le cas particulier où tous les traitements pour déterminer la position PA sont réalisés par le calculateur 14 de l'appareil 10. En variante, ces traitements sont répartis sur plusieurs calculateurs distincts. L'un de ces calculateurs distincts peut être celui d'un serveur informatique mécaniquement indépendant de l'appareil 10. Par exemple, l'appareil 10 transmet les mesures à ce serveur et ce serveur détermine la position PA puis renvoie la position PA déterminée à l'appareil 10 qui l'affiche sur son écran 24. Dans ce cas, la carte 16 est aussi enregistrée dans la mémoire de ce serveur.

La sélection d'une loi de déplacement spécifique en fonction de la zone dans laquelle se situe la particule peut être mise en oeuvre indépendamment des autres caractéristiques du procédé de la figure 4. En particulier, cette sélection de la loi de déplacement peut être mise en oeuvre indépendamment de l'utilisation de facteurs correctifs tels que les facteurs $\alpha^i$ et $\varepsilon^i$ et/ou indépendamment de l'utilisation, en tant que contraintes prédéfinies, des directions privilégiées de déplacement.

De même, l'utilisation de directions privilégiées de déplacement associées à des zones peut aussi être mise en oeuvre indépendamment des autres caractéristiques du procédé de la figure 4. En particulier, l'utilisation, en tant que contraintes prédéfinies, des directions privilégiées de déplacement peut être mise en oeuvre indépendamment de l'utilisation de facteurs correctifs tels que les facteurs $\alpha^i$ et $\varepsilon^i$ et/ou indépendamment de la sélection de la loi de déplacement en fonction de la zone à l'intérieure de laquelle se situe la particule.

**Revendications**

1. Procédé de localisation d'un appareil qui est déplacé à l'intérieur d'un espace tridimensionnel, ce procédé comportant :

   a) la fourniture d'une carte de l'espace tridimensionnel et de contraintes prédéfinies sur les déplacements de l'appareil dans cet espace tridimensionnel,
   b) la génération (90), par un calculateur électronique, de plusieurs particules distinctes, chaque particule étant associée :

   - à des coordonnées codant sa position sur la carte, et
   - à un poids représentant la probabilité que l'appareil se trouve à l'emplacement de cette particule,

   c) la réception (92) de mesures représentatives de la direction de déplacement de l'appareil et de l'amplitude de ce déplacement depuis sa précédente position, ces mesures étant réalisées par des capteurs embarqués dans l'appareil déplacé,
   d) la mise à jour (96) des coordonnées de la position de chaque particule en fonction des mesures reçues lors de l'étape c) et d'une loi de déplacement prédéterminée pour déplacer cette particule de sa précédente position $P^i_{k-1}$ vers une nouvelle position $P^i_k$ de manière corrélée avec le déplacement mesuré de l'appareil, puis
   e) pour chaque particule, si le dernier déplacement de cette particule de la position $P^i_{k-1}$ à la position $P^i_k$ satisfait aux contraintes prédéfinies, l'augmentation (98) du poids associé à cette particule par rapport aux poids des particules dont le dernier déplacement enfreint ces contraintes prédéfinies,

   - la réitération des étapes c) à e), et

   f) l'estimation (106) de la position de l'appareil à partir des positions des particules et des poids associés à ces particules en attribuant, lors de cette estimation, plus d'importance aux positions des particules associées aux poids les plus élevés,

   **caractérisé en ce que** :

   - lors de l'étape a), la carte fournie contient plusieurs zones distinctes, chaque zone distincte étant associée :

   • à des coordonnées définissant la position sur la carte de sa périphérie, et
   • à une loi de déplacement parmi un ensemble de plusieurs lois de déplacement différentes, la loi de déplacement associée à une zone permettant d'estimer plus précisément, à partir des mêmes mesures reçues, la direction et l'amplitude du déplacement de l'appareil lorsque celui-ci est situé à l'intérieur de cette zone que si l'une quelconque des autres lois de déplacement de l'ensemble était utilisée, à cet effet les lois de déplacement différentes se distinguent les unes des autres par les opérations mathématiques qui relient les coordonnées d'une particule aux mesures reçues lors de l'étape c), et

   - l'étape d) comporte systématiquement pour chaque particule :

   • une opération (94) d'identification de la zone à l'intérieur de laquelle se trouve la particule en comparant les coordonnées de cette particule aux périphéries des zones de la carte définies par les coordonnées fournies lors de l'étape a), puis,
   • une opération d'utilisation pour la mise à jour des coordonnées de cette particule de la seule loi de déplacement associée à la zone identifiée lors de l'opération d'identification.

2. Procédé selon la revendication 1, dans lequel

   - la loi de déplacement comporte :

   • au moins une première variable mesurée dont la valeur est fonction de la mesure de la direction de déplacement reçue lors de l'étape c), et
   • une seconde variable mesurée dont la valeur est fonction de la mesure de l'amplitude de ce déplacement reçue lors de l'étape c), et
   • un facteur correctif d'un biais combiné par une opération arithmétique à l'une des variables mesurées, et

- chaque particule est également associée à une valeur actuelle de ce facteur correctif, la valeur actuelle de ce facteur correctif étant construite à chaque itération de l'étape d) à partir d'une précédente valeur actuelle de ce facteur correctif calculée lors d'une précédente itération de l'étape d) à laquelle est ajoutée une variable aléatoire tirée selon une loi prédéfinie de probabilité, et les valeurs actuelles de différentes particules étant initialisées, avant la première exécution de l'étape d), à différentes valeurs initiales, et

- lors de l'étape d), pour chaque particule dont les coordonnées sont mises à jour à l'aide de cette loi de déplacement, la valeur du facteur correctif dans la loi de déplacement est prise égale à la valeur actuelle de ce facteur correctif associée à cette particule.

3. Procédé selon la revendication 2, dans lequel le facteur correctif vient, dans la loi de déplacement, s'additionner ou se multiplier à la seconde variable mesurée et la variation de l'écart type $\sigma_\varepsilon$ de la loi prédéfinie de probabilité est maintenue inférieure à 10% par seconde pendant plus de 90 % du temps d'utilisation du procédé pour localiser l'appareil, la variation de l'écart type $\sigma_\varepsilon$ étant donnée par le ratio suivant : $\sum\sigma_{\varepsilon k}/T$ où :

   - $\sigma_{\varepsilon k}$ est l'écart type de la loi prédéfinie de probabilité lors de la k-ième itération de l'étape d),
   - $\sum\sigma_{\varepsilon k}$ est la somme des écarts types $\sigma_{\varepsilon k}$ entre la q-ième itération et la p-ième itération de l'étape d), où q est un entier strictement inférieur à p,
   - T est la durée en seconde de l'intervalle de temps qui s'est écoulé entre la q-ième et la p-ième itération de l'étape d).

4. Procédé selon la revendication 2, dans lequel le facteur correctif vient, dans la loi de déplacement, s'additionner ou se multiplier à la première variable mesurée et la variation de l'écart type $\sigma_\alpha$ de la loi prédéfinie de probabilité est maintenue inférieure à 10° par seconde pendant plus de 90 % du temps d'utilisation du procédé pour localiser l'appareil, la variation de l'écart type $\sigma_\alpha$ étant donnée par le ratio suivant : $\sum\sigma_{\alpha k}/T$, où :

   - $\sigma_{\alpha k}$ est l'écart type de la loi prédéfinie de probabilité lors de la k-ième itération de l'étape d),
   - $\sum\Delta_{\alpha k}$ est la somme des écarts types $\sigma_{\alpha k}$ entre la q-ième itération et la p-ième itération de l'étape d), où q est un entier strictement inférieur à p,
   - T est la durée en seconde de l'intervalle de temps qui s'est écoulé entre la q-ième et la p-ième itération de l'étape d).

5. Procédé selon l'une quelconque des revendications précédentes, dans lequel, après plusieurs itérations des étapes c) à e), le procédé comporte une étape (102) de ré-échantillonnage des particules lors de laquelle :

   - les particules associées aux poids les plus faibles sont supprimées, et
   - de nouvelles particules sont automatiquement générées pour remplacer les particules supprimées, une nouvelle valeur actuelle du facteur correctif étant affectée à chaque nouvelle particule, chaque nouvelle valeur étant fonction d'une ou plusieurs des valeurs actuelles du facteur correctif associées aux particules qui n'ont pas été supprimées et indépendante des valeurs actuelles du facteur correctif associées aux particules qui ont été supprimées.

6. Procédé selon l'une quelconque des revendications précédentes, dans lequel :

   - lors de l'étape a), les contraintes prédéfinies fournies contiennent des coordonnées codant les positions et les dimensions d'obstacles infranchissables par l'appareil dans l'espace tridimensionnel, et
   - l'étape e), comporte, pour chaque particule :

      • la recherche d'une intersection entre le segment $[P^i_{k-1}\,;\,P^i_k]$ et un obstacle infranchissable en utilisant les coordonnées de cette obstacle infranchissable fournies lors de l'étape a), et
      • la diminution du poids associé à cette particule si une telle intersection existe et, dans le cas contraire, l'absence de diminution ou l'augmentation du poids associé à cette particule.

7. Procédé selon la revendication 6, dans lequel :

   - lors de l'étape a), la carte fournie contient plusieurs zones distinctes, chaque zone distincte étant associée :

      • à des coordonnées définissant la position sur la carte de sa périphérie, et
      • une liste d'identifiants des seuls obstacles infranchissables situés à l'intérieur de cette zone,

- l'étape e) comporte systématiquement pour chaque particule :

• une opération (94) d'identification de la zone à l'intérieur de laquelle se trouve la particule en comparant les coordonnées mises à jour de cette particule aux périphéries des zones de la carte définies par les coordonnées fournies lors de l'étape a), puis
• une opération de recherche d'une intersection entre le segment $[P^i_{k-1} ; P^i_k]$ et uniquement les obstacles infranchissables dont les identifiants sont contenus dans la liste associée à la zone identifiée lors de l'opération d'identification.

8. Procédé selon l'une quelconque des revendications précédentes, dans lequel :

- lors de l'étape a), la carte fournie contient au moins une zone à direction privilégiée de déplacement associée :

• à des coordonnées définissant la position sur la carte de sa périphérie, et
• à une direction privilégiée de déplacement dans cette zone,

- l'étape e) comporte pour chaque particule :

• une opération (94) de détection de la présence de cette particule à l'intérieur de la zone à direction privilégiée de déplacement en comparant les coordonnées de cette particule à la périphérie de la zone à direction privilégiée de déplacement définie par les coordonnées fournies lors de l'étape a), puis,
• si la particule est détectée comme étant présente à l'intérieur de la zone à direction privilégiée de déplacement, une opération (98) d'augmentation du poids de cette particule si l'écart angulaire entre la direction de déplacement de cette particule de la position $P^i_{k-1}$ à la position $P^i_k$ et la direction privilégiée de déplacement associée à cette zone est égal à 0° ou à 180° à plus ou moins $\sigma_\gamma$ près, cette augmentation étant réalisée par rapport aux poids des autres particules situées à l'intérieur de la même zone et pour lesquelles cet écart n'est pas égal à 0° ou à 180° à plus ou moins $\sigma_\gamma$ près, où $\sigma_\gamma$ est une tolérance angulaire prédéterminée, et
• si la particule est détectée comme étant en dehors de la zone à direction privilégiée de déplacement, l'inhibition de l'utilisation de la direction privilégiée de déplacement associée à cette zone pour mettre à jour le poids de cette particule.

9. Support d'enregistrement d'informations, **caractérisé en ce qu'**il comporte des instructions pour exécuter un procédé conforme à l'une quelconque des revendications précédentes, lorsque ces instructions sont exécutées par un calculateur électronique.

10. Unité électronique de localisation d'un appareil déplaçable à l'intérieur d'un espace tridimensionnel, cette unité électronique comportant :

- une mémoire (12) contenant une carte de l'espace tridimensionnel et des contraintes prédéfinies sur les déplacements de l'appareil dans cet espace tridimensionnel,
- un calculateur électronique (14) programmé pour :

b) générer plusieurs particules distinctes, chaque particule étant associée :

- à des coordonnées codant sa position sur la carte, et
- à un poids représentant la probabilité que l'appareil se trouve à l'emplacement de cette particule,

c) recevoir des mesures représentatives de la direction de déplacement de l'appareil et de l'amplitude de ce déplacement depuis sa précédente position, ces mesures étant réalisées par des capteurs embarqués dans l'appareil déplacé,
d) mettre à jour les coordonnées de la position de chaque particule en fonction des mesures reçues et d'une loi de déplacement prédéterminée pour déplacer cette particule de sa précédente position $P^i_{k-1}$ vers une nouvelle position $P^i_k$ de manière corrélée avec le déplacement mesuré de l'appareil,
e) pour chaque particule, si le dernier déplacement de cette particule de la position $P^i_{k-1}$ à la position $P^i_k$ satisfait aux contraintes prédéfinies, augmenter le poids associé à cette particule par rapport aux poids des particules dont le dernier déplacement enfreint ces contraintes prédéfinies,

- réitérer les étapes c) à e), et

f) estimer la position de l'appareil à partir des positions des particules et des poids associés à ces particules en attribuant, lors de cette estimation, plus d'importance aux positions des particules associées aux poids les plus élevés,

**caractérisé en ce que** :

- la carte enregistrée dans la mémoire contient plusieurs zones distinctes, chaque zone distincte étant associée :

• à des coordonnées définissant la position sur la carte de sa périphérie, et
• une loi de déplacement parmi un ensemble de plusieurs lois de déplacement différentes, la loi de déplacement associée à une zone permettant d'estimer plus précisément, à partir des mêmes mesures reçues, la direction et l'amplitude du déplacement de l'appareil lorsque celui-ci est situé à l'intérieur de cette zone que si l'une quelconque des autres lois de déplacement de l'ensemble était utilisée, à cet effet les lois de déplacement différentes se distinguent les unes des autres par les opérations mathématiques qui relient les coordonnées d'une particule aux mesures reçues lors de l'étape c), et

- le calculateur est également programmé pour, lors de l'étape d) et systématiquement pour chaque particule :

• identifier la zone à l'intérieur de laquelle se trouve la particule en comparant les coordonnées de cette particule aux périphéries des zones de la carte, puis
• utiliser, pour la mise à jour des coordonnées de cette particule, la seule loi de déplacement associée à la zone identifiée.

11. Appareil directement transportable par un piéton qui se déplace à l'intérieur d'un espace tridimensionnel, cet appareil comportant une centrale inertielle (17) apte à mesurer des grandeurs physiques représentatives de la direction de déplacement de cet appareil et de l'amplitude de ce déplacement,
**caractérisé en ce que** l'appareil comporte aussi unité électronique (11) de localisation conforme à la revendication 10.

**Patentansprüche**

1. Verfahren zum Orten eines Geräts, das in dem Inneren eines dreidimensionalen Raums bewegt wird, wobei dieses Verfahren Folgendes umfasst:

a) die Lieferung einer Karte des dreidimensionalen Raums und vordefinierter Auflagen in Zusammenhang mit den Bewegungen des Geräts in diesem dreidimensionalen Raum,
b) das Erzeugen (90) mehrerer separater Teilchen durch einen elektronischen Rechner, wobei jedes Teilchen assoziiert ist mit:

- Koordinaten, die seine Position auf der Karte codieren, und
- einem Gewicht, das die Wahrscheinlichkeit darstellt, dass sich das Gerät an der Stelle dieses Teilchens befindet,

c) das Empfangen (92) von Messungen, die für die Bewegungsrichtung des Geräts und für die Amplitude dieser Bewegung ausgehend von ihrer vorhergehenden Position repräsentativ sind, wobei diese Messungen von Sensoren ausgeführt werden, die in dem bewegten Gerät mitgeführt sind,
d) das Aktualisieren (96) der Koordinaten der Position jedes Teilchens in Abhängigkeit von bei dem Schritt c) empfangenen Messungen und von einem vorbestimmten Bewegungsgesetz, um dieses Teilchen von seiner vorhergehenden Position $P^i_{k-1}$ zu einer neuen Position $P^i_k$ auf eine Art zu bewegen, die mit der Bewegung, die von dem Gerät gemessen wird, korreliert ist, dann
e) für jedes Teilchen, falls die letzte Bewegung dieses Teilchens von der Position $P^i_{k-1}$ zu der Position $P^i_k$ die vordefinierten Auflagen erfüllt, Erhöhung (98) des Gewichts, das mit diesem Teilchen assoziiert ist, in Bezug auf die Gewichte der Teilchen, deren letzte Bewegung gegen diese vordefinierten Auflagen verstößt,

- die Wiederholung der Schritte c) bis e), und

f) die Schätzung (106) der Position des Geräts ausgehend von den Positionen der Teilchen und der Gewichte, die mit diesen Teilchen assoziiert sind, indem bei dieser Schätzung den Positionen der Teilchen, die mit den höchsten Gewichten assoziiert sind, mehr Bedeutung zugemessen wird,

**dadurch gekennzeichnet, dass**:

- bei dem Schritt a) die gelieferte Karte mehrere separate Zonen enthält, wobei jede separate Zone assoziiert ist mit:

  • Koordinaten, die die Position auf der Karte ihres Umfangs definieren, und
  • einem Bewegungsgesetz aus einer Einheit mehrerer unterschiedlicher Bewegungsgesetze, wobei das Bewegungsgesetz, das mit einer Zone assoziiert ist, es erlaubt, ausgehend von denselben empfangenen Messungen die Richtung und Amplitude der Bewegung des Geräts genauer zu schätzen, wenn sich dieses im Inneren dieser Zone befindet, als wenn irgendeines der anderen Bewegungsgesetze der Einheit verwendet würde, wobei sich dazu die unterschiedlichen Bewegungsgesetze voneinander durch mathematische Operationen unterscheiden, die die Koordinaten eines Teilchens mit Messungen, die während des Schritts c) empfangen wurden, verbinden, und

- der Schritt d) systematisch für jedes Teilchen Folgendes umfasst:

  • einen Identifikationsvorgang (94) der Zone in deren Innerem sich das Teilchen befindet, indem die Koordinaten dieses Teilchens mit den Umfängen der Zonen der Karten, die durch die Koordinaten definiert sind, die während des Schritts a) geliefert werden, verglichen werden, dann
  • zur Aktualisierung der Koordinaten dieses Teilchens einen Verwendungsvorgang des einzigen Bewegungsgesetzes, das mit der bei dem Identifikationsvorgang identifizierten Zone assoziiert ist.

2. Verfahren nach Anspruch 1, wobei

  - das Bewegungsgesetz Folgendes umfasst:

    • mindestens eine erste gemessene Variable, deren Wert von der Messung der Bewegungsrichtung, die bei dem Schritt c) empfangen wird, abhängt, und
    • eine zweite gemessene Variable, deren Wert von der Messung der Amplitude dieser Bewegung, die bei dem Schritt c) empfangen wird, abhängt, und
    • einen Korrekturfaktor einer einseitigen Neigung, die durch eine arithmetische Operation mit einer der gemessenen Variablen kombiniert wird, und

  - jedes Teilchen auch mit einem aktuellen Wert dieses Korrekturfaktors assoziiert ist, wobei der aktuelle Wert dieses Korrekturfaktors bei jeder Iteration des Schritts d) ausgehend von einem vorhergehenden aktuellen Wert dieses Korrekturfaktors, der bei einer vorhergehenden Iteration des Schritts d) berechnet wird, gebaut wird, zu dem eine willkürliche Variable hinzugefügt wird, die gemäß einem vordefinierten Wahrscheinlichkeitsgesetz gezogen wird, und wobei die aktuellen Werte unterschiedlicher Teilchen vor der ersten Ausführung des Schritts d) auf unterschiedliche Anfangswerte initialisiert werden, und
  - bei dem Schritt d) für jedes Teilchen, dessen Koordinaten mit Hilfe dieses Bewegungsgesetzes aktualisiert werden, der Wert des Korrekturfaktors in dem Bewegungsgesetz gleich dem aktuellen Wert dieses Korrekturfaktors in Zusammenhang mit diesem Teilchen genommen wird.

3. Verfahren nach Anspruch 2, wobei der Korrekturfaktor in dem Bewegungsgesetz zu der zweiten gemessenen Variable hinzugefügt oder mit ihr multipliziert wird, und die Variation der Standardabweichung $\sigma_\varepsilon$ von dem vordefinierten Wahrscheinlichkeitsgesetz kleiner als 10 % pro Sekunde während mehr als 90 % der Verwendungszeit des Verfahrens gehalten wird, um das Gerät zu orten, wobei die Variation der Standardabweichung $\sigma_\varepsilon$ durch das folgende Verhältnis gegeben ist: $\Sigma\sigma_{\varepsilon k}/T$, wobei:

  - $\sigma_{\varepsilon k}$ die Standardabweichung des vordefinierten Wahrscheinlichkeitgesetzes bei der k-ten Iteration des Schritts d) ist,
  - $\Sigma\sigma_{\varepsilon k}$ die Summe der Standardabweichungen zwischen der q-ten Iteration und der p-ten Iteration des Schritts d) ist, wobei q eine ganze Zahl ist, die strikt kleiner ist als p,
  - T die Dauer in Sekunde des Zeitintervalls ist, das zwischen der q-ten und der p-ten Iteration des Schritts d) verstrichen ist.

4. Verfahren nach Anspruch 2, wobei der Korrekturfaktor in dem Bewegungsgesetz zu der ersten gemessenen Variable hinzugefügt oder mit ihr multipliziert wird, und die Standardabweichung $\sigma_\alpha$ des vordefinierten Wahrscheinlichkeitsgesetzes während mehr als 90 % der Verwendungszeit des Verfahrens unter 10° pro Sekunde gehalten wird, um das Gerät zu orten, wobei die Variation der Standardabweichung $\sigma_\alpha$ durch das folgende Verhältnis gegeben ist: $\Sigma\sigma_{\alpha k}$ /T, wobei:

- $\sigma_{\alpha k}$ die Standardabweichung des vordefinierten Wahrscheinlichkeitsgesetzes bei der k-ten Iteration des Schritts d) ist,
- $\Sigma\sigma_{\alpha k}$ die Summe der Standardabweichungen zwischen der q-ten Iteration und der p-ten Iteration des Schritts d) ist, wobei q eine ganze Zahl ist, die strikt kleiner ist als p,
- T die Dauer in Sekunde des Zeitintervalls ist, das zwischen der q-ten und der p-ten Iteration des Schritts d) verstrichen ist.

5. Verfahren nach einem der vorhergehenden Ansprüche, wobei das Verfahren nach mehreren Iterationen der Schritte c) bis e) einen Schritt (102) der erneuten Abtastung der Teilchen ist, bei dem:

- die Teilchen, die mit den geringsten Gewichten assoziiert sind, eliminiert werden, und
- neue Teilchen automatisch erzeugt werden, um die eliminierten Teilchen zu ersetzen, wobei jedem neuen Teilchen ein neuer aktueller Wert des Korrekturfaktors zugewiesen wird, wobei jeder neue Wert von einem oder mehreren der aktuellen Werte des Korrekturfaktors, die mit den Teilchen, die nicht entfernt wurden, assoziiert sind, abhängt und unabhängig von den aktuellen Werten des Korrekturfaktors, die mit den Teilchen, die eliminiert wurden, assoziiert sind, ist.

6. Verfahren nach einem der vorhergehenden Ansprüche, bei dem:

- bei dem Schritt a) die gelieferten vordefinierten Auflagen Koordinaten enthalten, die die Positionen und die Maße von Hindernissen codieren, die von dem Gerät in dem dreidimensionalen Raum nicht überwunden werden können, und
- der Schritt e) für jedes Teilchen Folgendes umfasst:

• die Suche einer Schnittstelle zwischen dem Segment $[P^i_{k-1} ; P^i_k]$ und einem unüberwindbaren Hindernis, indem die Koordinaten dieses unüberwindbaren Hindernisses, die bei dem Schritt a) geliefert werden, verwendet werden, und
• die Verringerung des Gewichts, das mit diesem Teilchen assoziiert ist, falls eine solche Schnittstelle existiert, und, anderenfalls, das Fehlen der Verringerung oder Erhöhung des Gewichts, das mit diesem Teilchen assoziiert ist.

7. Verfahren nach Anspruch 6, wobei:

- bei dem Schritt a) die gelieferte Karte mehrere separate Zonen enthält, wobei jede separate Zone assoziiert ist mit:

• Koordinaten, die die Position auf der Karte ihres Umfangs definieren, und
• eine Liste von Identifikatoren mit nur unüberwindbaren Hindernissen, die im Inneren dieser Zone liegen,

- der Schritt e) systematisch für jedes Teilchen Folgendes umfasst:

• einen Identifikationsvorgang (94) der Zone, in deren Innerem sich das Teilchen befindet, indem die aktualisierten Koordinaten dieses Teilchens mit den Umfängen der Zonen der Karte, die durch die Koordinaten definiert sind, die bei dem Schritt a) geliefert werden, verglichen werden, dann
• einen Suchvorgang einer Schnittstelle zwischen dem Segment $[P^i_{k-1} ; P^i_k]$ und nur den unüberwindbaren Hindernissen, deren Identifikatoren in der Liste enthalten sind, die mit der Zone assoziiert ist, die bei dem Identifikationsvorgang identifiziert wurde.

8. Verfahren nach einem der vorhergehenden Ansprüche, bei dem:

- bei dem Schritt a) die gelieferte Karte mindestens eine Zone mit privilegierter Bewegungsrichtung enthält, die assoziiert ist mit:

• Koordinaten, die die Position auf der Karte ihres Umfangs definieren, und
• einer privilegierten Bewegungsrichtung in dieser Zone,

- der Schritt e) für jedes Teilchen Folgendes umfasst:

• einen Erfassungsvorgang (94) der Gegenwart dieses Teilchens in dem Inneren der Zone mit privilegierter Bewegungsrichtung, indem die Koordinaten dieses Teilchens mit dem Umfang der Zone mit privilegierter Bewegungsrichtung, die von den Koordinaten definiert wird, die bei dem Schritt a) geliefert werden, verglichen werden, dann
• falls das Teilchen als im Inneren der Zone mit privilegierter Bewegungsrichtung anwesend erfasst wird, eine Erhöhungsoperation (98) des Gewichts dieses Teilchens, falls der Winkelabstand zwischen der Bewegungsrichtung dieses Teilchens von der Position $P^i_{k-1}$ zu der Position $P^i_k$ und der privilegierten Bewegungsrichtung, die mit dieser Zone assoziiert ist, gleich 0° oder gleich 180° plus/minus $\sigma\gamma$ ist, wobei diese Erhöhung in Bezug auf die Gewichte der anderen Teilchen erfolgt, die sich im Inneren derselben Zone befinden, und für die diese Abweichung nicht gleich 0° oder 180° plus/minus $\sigma\gamma$ ist, wobei $\sigma\gamma$ eine vorbestimmte Winkeltoleranz ist, und
• falls das Teilchen als außerhalb der Zone mit privilegierter Bewegungsrichtung erfasst wird, die Inhibition der Verwendung der privilegierten Bewegungsrichtung, die mit dieser Zone assoziiert ist, um das Gewicht dieses Teilchens zu aktualisieren.

9. Datenaufzeichnungsträger, **dadurch gekennzeichnet, dass** er Anweisungen umfasst, um ein Verfahren nach einem der vorhergehenden Ansprüche auszuführen, wenn diese Anweisungen von einem elektronischen Rechner ausgeführt werden.

10. Elektronische Ortungseinheit eines Geräts, das im Inneren eines dreidimensionalen Raums bewegbar ist, wobei diese elektronische Einheit Folgendes umfasst:

- einen Speicher (12), der eine Karte des dreidimensionalen Raums und vordefinierte Auflagen auf den Bewegungen des Geräts in diesem dreidimensionalen Raum enthält,
- einen elektronischen Rechner (14), der programmiert ist, um:

b) mehrere separate Teilchen zu erzeugen, wobei jedes Teilchen assoziiert ist mit:

- Koordinaten, die seine Position auf der Karte codieren, und

- einem Gewicht, das die Wahrscheinlichkeit darstellt, dass sich das Gerät an der Stelle dieses Teilchens befindet,

c) die Messungen zu empfangen, die für die Bewegungsrichtung des Geräts und die Amplitude dieser Bewegung ausgehend von seiner vorhergehenden Position repräsentativ sind, wobei diese Messungen von Sensoren ausgeführt werden, die in dem bewegten Gerät mitgeführt werden,
d) die Koordinaten der Position jedes Teilchens in Abhängigkeit von den empfangenen Messungen und einem vorbestimmten Bewegungsgesetz zu aktualisieren, um dieses Teilchen von seiner vorhergehenden Position $P^i_{k-1}$ zu einer neuen Position $P^i_k$ auf eine Art, die mit der gemessenen Bewegung des Geräts korreliert, zu aktualisieren,
e) für jedes Teilchen, falls die letzte Bewegung dieses Teilchens von der Position $P^i_{k-1}$ zu der Position $P^i_k$ die vordefinierten Auflagen erfüllt, das Gewicht, das mit diesem Teilchen assoziiert ist, in Bezug auf die Gewichte der Teilchen, deren letzte Bewegung gegen diese vordefinierten Auflagen verstößt, zu erhöhen,

- die Schritte c) bis e) zu wiederholen, und

f) die Position des Geräts ausgehend von den Positionen der Teilchen und den Gewichten, die mit diesen Teilchen assoziiert sind, zu schätzen, indem bei dieser Schätzung den Positionen der Teilchen, die mit den höchsten Gewichten assoziiert sind, mehr Bedeutung zugemessen wird,

**dadurch gekennzeichnet, dass**:

- die Karte, die in dem Speicher aufgezeichnet ist, mehrere separate Zonen enthält, wobei jede separate Zone assoziiert ist mit:

• Koordinaten, die die Position auf der Karte ihres Umfangs definieren, und
• einem Bewegungsgesetz aus einer Einheit mehrerer unterschiedlicher Bewegungsgesetze, wobei das Bewegungsgesetz, das mit einer Zone assoziiert ist, es erlaubt, ausgehend von denselben empfangenen Messungen die Richtung und Amplitude der Bewegung des Geräts genauer zu schätzen, wenn sich dieses im Inneren dieser Zone befindet, als wenn irgendeines der anderen Bewegungsgesetze der Einheit verwendet würde, wobei sich dazu die unterschiedlichen Bewegungsgesetze voneinander durch mathematische Operationen unterscheiden, die die Koordinaten eines Teilchens mit den bei dem Schritt c) empfangenen Messungen verbinden, und

- der Rechner auch programmiert ist, um bei dem Schritt d) und systematisch für jedes Teilchen:

• die Zone, in deren Innerem sich das Teilchen befindet, zu identifizieren, indem die Koordinaten dieses Teilchens mit den Umfängen der Zonen der Karte verglichen werden, dann
• zur Aktualisierung der Koordinaten dieses Teilchen das einzige Bewegungsgesetz, das mit der identifizierten Zone assoziiert ist, zu verwenden.

11. Gerät, das direkt von einem Fußgänger transportierbar ist, der sich im Inneren eines dreidimensionalen Raums bewegt, wobei dieses Gerät eine Trägheitszentrale (17) umfasst, die geeignet ist, um physikalische Größen zu messen, die für die Bewegungsrichtung dieses Geräts und die Amplitude dieser Bewegung repräsentativ sind, **dadurch gekennzeichnet, dass** dieses Gerät auch eine elektronische Ortungseinheit (11) nach Anspruch 10 umfasst.

## Claims

1. Method of location of a device which is displaced inside a three-dimensional space, this method comprising:

a) the provision of a map of the three-dimensional space and of predefined constraints on the displacements of the device in this three-dimensional space,
b) the generation (90), by an electronic computer, of several distinct particles, each particle being associated:

- with coordinates coding its position on the map, and
- with a weight representing the probability that the device is situated at the site of this particle,

c) the reception (92) of measurements representative of the direction of displacement of the device and of the amplitude of this displacement from its previous position, these measurements being carried out by sensors onboard the displaced device,
d) the updating (96) of the coordinates of the position of each particle as a function of the measurements received during step c) and of a predetermined displacement law for displacing this particle from its previous position $P^i_{k-1}$ to a new position $P^i_k$ in a manner correlated with the measured displacement of the device, and then
e) for each particle, if the latest displacement of this particle from the position $P^i_{k-1}$ to the position $P^i_k$ satisfies the predefined constraints, the increasing (98) of the weight associated with this particle with respect to the weights of the particles whose latest displacement infringes these predefined constraints,

- the repetition of steps c) to e), and

f) the estimation (106) of the position of the device on the basis of the positions of the particles and of the weights associated with these particles by allotting, during this estimation, more importance to the positions of the particles associated with the highest weights,

**characterized in that**:

- during step a), the map provided contains several distinct zones, each distinct zone being associated:

• with coordinates defining the position on the map of its periphery, and
• with a displacement law from among a set of several different displacement laws, the displacement law associated with a zone making it possible to estimate more precisely, on the basis of the same measurements received, the direction and the amplitude of the displacement of the device when the latter is situated inside this zone than if any one of the other displacement laws of the set were used, for this purpose the different displacement laws are distinguished from one another by the mathematical operations which link the coordinates of a particle to the measurements received during step c), and

- step d) systematically comprises for each particle:

• an operation (94) of identifying the zone inside which the particle is situated by comparing the coordinates of this particle with the peripheries of the zones of the map that are defined by the coordinates provided during step a), and then,
• an operation of using for the updating of the coordinates of this particle just the displacement law associated with the zone identified during the identification operation.

2. Method according to Claim 1, in which

- the displacement law comprises:

• at least one first measured variable whose value is dependent on the measurement of the direction of displacement received during step c), and
• a second measured variable whose value is dependent on the measurement of the amplitude of this displacement received during step c), and
• a corrective factor of a bias combined by an arithmetical operation with one of the measured variables, and

- each particle is also associated with a current value of this corrective factor, the current value of this corrective factor being constructed at each iteration of step d) on the basis of a previous current value of this corrective factor, computed during a previous iteration of step d), to which is added a random variable drawn according to a predefined probability law, and the current values of various particles being initialized, before the first execution of step d), to various initial values, and
- during step d), for each particle whose coordinates are updated with the aid of this displacement law, the value of the corrective factor in the displacement law is taken equal to this corrective factor's current value associated with this particle.

3. Method according to Claim 2, in which the corrective factor is, in the displacement law, added together or multiplied with the second measured variable and the variation of the standard deviation $\sigma_\varepsilon$ of the predefined probability law is maintained below 10% per second for more than 90% of the time of use of the method for locating the device, the variation of the standard deviation $\sigma_\varepsilon$ being given by the following ratio: $\Sigma\sigma_{\varepsilon k}/T$, where:

- $\sigma_{\varepsilon k}$ is the standard deviation of the predefined probability law during the k-th iteration of step d),
- $\Sigma\sigma_{\varepsilon k}$ is the sum of the standard deviations $\sigma_{\varepsilon k}$ between the q-th iteration and the p-th iteration of step d), where q is an integer strictly less than p,
- T is the duration in seconds of the time interval which has elapsed between the q-th and the p-th iteration of step d).

4. Method according to Claim 2, in which the corrective factor is, in the displacement law, added together or multiplied with the first measured variable and the variation of the standard deviation $\sigma_\alpha$ of the predefined probability law is maintained below 10° per second for more than 90% of the time of use of the method for locating the device, the variation of the standard deviation $\sigma_\alpha$ being given by the following ratio: $\Sigma\sigma_{\alpha k}/T$, where:

- $\sigma_{\alpha k}$ is the standard deviation of the predefined probability law during the k-th iteration of step d),
- $\Sigma\sigma_{\alpha k}$ is the sum of the standard deviations $\sigma_{\alpha k}$ between the q-th iteration and the p-th iteration of step d), where q is an integer strictly less than p,
- T is the duration in seconds of the time interval which has elapsed between the q-th and the p-th iteration of step d).

5. Method according to any one of the preceding claims, in which, after several iterations of steps c) to e), the method comprises a step (102) of re-sampling the particles during which:

- the particles associated with the lowest weights are eliminated, and
- new particles are automatically generated to replace the eliminated particles, a new current value of the corrective factor being assigned to each new particle, each new value being dependent on one or more of the corrective factor's current values associated with the particles which have not been eliminated and independent of the corrective factor's current values associated with the particles which have been eliminated.

6. Method according to any one of the preceding claims, in which:

- during step a), the predefined constraints provided contain coordinates coding the positions and the dimensions of obstacles which are impassable to the device in the three-dimensional space, and
- step e) comprises, for each particle:

• the search for an intersection between the segment $[P^i_{k-1}; P^i_k]$ and an impassable obstacle by using the coordinates of this impassable obstacle which are provided during step a), and
• the decreasing of the weight associated with this particle if such an intersection exists and, in the converse case, the absence of decreasing or the increasing of the weight associated with this particle.

7. Method according to claim 6, in which:

- during step a), the map provided contains several distinct zones, each distinct zone being associated:

• with coordinates defining the position on the map of its periphery, and
• a list of identifiers of just the impassable obstacles situated inside this zone,

- step e) systematically comprises for each particle:

• an operation (94) of identifying the zone inside which the particle is situated by comparing the updated coordinates of this particle with the peripheries of the zones of the map which are defined by the coordinates provided during step a), and then
• an operation of searching for an intersection between the segment $[P^i_{k-1}; P^i_k]$ and solely the impassable obstacles whose identifiers are contained in the list associated with the zone identified during the identification operation.

8. Method according to any one of the preceding claims, in which:

- during step a), the map provided contains at least one zone with favored direction of displacement associated:

• with coordinates defining the position on the map of its periphery, and
• with a favored direction of displacement in this zone,

- step e) comprises for each particle:

• an operation (94) of detecting the presence of this particle inside the zone with favored direction of displacement by comparing the coordinates of this particle with the periphery of the zone with favored direction of displacement defined by the coordinates provided during step a), and then,
• if the particle is detected as being present inside the zone with favored direction of displacement, an operation (98) of increasing the weight of this particle if the angular deviation between the direction of displacement of this particle from the position $P^i_{k-1}$ to the position $P^i_k$ and the favored direction of displacement associated with this zone is equal to 0° or to 180° to within plus or minus $\sigma_\gamma$, this increasing being carried out with respect to the weights of the other particles situated inside the same zone and for which this deviation is not equal to 0° or to 180° to within plus or minus $\sigma_\gamma$, where $\sigma_\gamma$ is a predetermined angular tolerance, and
• if the particle is detected as being outside of the zone with favored direction of displacement, the prohibiting of the use of the favored direction of displacement associated with this zone to update the weight of this particle.

9.  Information recording medium, **characterized in that** it comprises instructions for executing a method according to any one of the preceding claims, when these instructions are executed by an electronic computer.

10. Electronic unit for locating a device displaceable inside a three-dimensional space, this electronic unit comprising:

   - a memory (12) containing a map of the three-dimensional space and predefined constraints on the displacements of the device in this three-dimensional space,
   - an electronic computer (14) programmed for:

   b) generating several distinct particles, each particle being associated:

   - with coordinates coding its position on the map, and
   - with a weight representing the probability that the device is situated at the site of this particle,

   c) receiving measurements representative of the direction of displacement of the device and of the amplitude of this displacement from its previous position, these measurements being carried out by sensors onboard the displaced device,
   d) updating the coordinates of the position of each particle as a function of the measurements received and of a predetermined displacement law for displacing this particle from its previous position $P^i_{k-1}$ to a new position $P^i_k$ in a manner correlated with the measured displacement of the device,
   e) for each particle, if the latest displacement of this particle from the position $P^i_{k-1}$ to the position $P^i_k$ satisfies the predefined constraints, increasing the weight associated with this particle with respect to the weights of the particles whose latest displacement infringes these predefined constraints,

   - repeating steps c) to e), and

   f) estimating the position of the device on the basis of the positions of the particles and of the weights associated with these particles by allotting, during this estimation, more importance to the positions of the particles associated with the highest weights, **characterized in that**:

   - the map recorded in the memory contains several distinct zones, each distinct zone being associated:

   • with coordinates defining the position on the map of its periphery, and
   • a displacement law from among a set of several different displacement laws, the displacement law associated with a zone making it possible to estimate more precisely, on the basis of the same measurements received, the direction and the amplitude of the displacement of the device when the latter is situated inside this zone than if any one of the other displacement laws of the set were used, for this purpose the different displacement laws are distinguished from one another by the mathematical operations which link the coordinates of a particle to the measurements received during step c), and

   - the computer is also programmed so as to, during step d) and systematically for each particle:

   • identify the zone inside which the particle is situated by comparing the coordinates of this particle with the peripheries of the zones of the map, and then
   • use, for the updating of the coordinates of this particle, just the displacement law associated with the zone identified.

11. Device directly transportable by a pedestrian who is moving in displacement inside a three-dimensional space, this device comprising an inertial platform (17) able to measure physical quantities representative of the direction of displacement of this device and of the amplitude of this displacement, **characterized in that** the device also comprises an electronic locating unit (11) according to Claim 10.

Fig. 1

Fig. 2

Fig. 3

Fig. 4

## RÉFÉRENCES CITÉES DANS LA DESCRIPTION

### Documents brevets cités dans la description

- WO 2012158441 A
- US 8548738 B1
- US 8548738 B

### Littérature non-brevet citée dans la description

- **O. WOODMAN et al.** Pedestrian localisation for indoor environments. ACM, 2008
- Pedestrian indoor localisation and tracking using a particule filter combined with a learning accessibility map. **J. STRAUB.** thèse. Université technique de Munich, Août 2010
- **SANJEEV ARULAMPALAM M. et al.** A tutorial on particle filters for Online Non linear/Non Gaussian Bayesian Tracking. *IEEE Transaction on signal processing,* 01 Février 2002, vol. 50 (2
- Combination of Map-supported Particle Filters with Activity Recognition for Blind Navigation. **BERNHARD SCHMITZ et al.** Compouters Helping People with spécial Needs. Springer Berlin Heidelberg, 11 Juillet 2012, 529-535
- **OLIVER WOODMAN et al.** Pedestrian localisation for indoor environments », Proceedings of the 10th international conférence on ubiquitous computing. *UBICOMP,* 01 Janvier 2008, vol. 08, 114
- **B. RISTIC ; S. ARULAMPALAM ; N. GORDON.** Beyond the Kalman Filter, particle filter for tracking applications. *Artech House,* 2004